(19) Europäisches Patentamt
European Patent Office
Office européen des brevets

(11) **EP 3 714 691 A1**

(12) **DEMANDE DE BREVET EUROPEEN**

(43) Date de publication:
**30.09.2020 Bulletin 2020/40**

(51) Int Cl.:
**A01N 1/00** *(2006.01)*   **A01N 1/02** *(2006.01)*
**A01N 33/12** *(2006.01)*   **A01N 25/02** *(2006.01)*
**A01P 1/00** *(2006.01)*   **C07C 41/56** *(2006.01)*
**C07C 43/30** *(2006.01)*

(21) Numéro de dépôt: **20165959.6**

(22) Date de dépôt: **26.03.2020**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **28.03.2019 FR 1903221**

(71) Demandeur: **ARKEMA FRANCE**
**92700 Colombes (FR)**

(72) Inventeurs:
• DUBOIS, Jean-Luc
  92705 COLOMBES CEDEX (FR)
• COUTURIER, Jean-Luc
  69493 PIERRE-BENITE Cedex (FR)
• BELLUARD, Didier
  69490 SARCEY (FR)
• HAROUX, Christian
  69126 BRINDAS (FR)

(74) Mandataire: **Arkema Patent**
**Arkema France**
**DRD-DPI**
**420, rue d'Estienne d'Orves**
**92705 Colombes Cedex (FR)**

(54) **COMPOSITION AQUEUSE A BASE DE POLYOXYMETHYLENES DIALKYL ETHERS (POM) ET SON UTILISATION POUR LA CONSERVATION ET/OU L'EMBAUMEMENT DU CORPS HUMAIN OU ANIMAL**

(57)    L'invention concerne un mélange de polyoxy-méthylène dialkyl éthers (POM) ayant une distribution moléculaire spécifique restreinte ainsi que son procédé de préparation.

L'invention concerne également une composition comprenant :
a) un mélange de polyoxyméthylène dialkyl éthers (POM) ayant une distribution moléculaire spécifique restreinte
b) au moins un agent biocide

c) au moins un agent pro-pénétrant
d) au moins un colorant
e) en option, un autre additif
et de l'eau comme diluant.

Elle concerne également un procédé non thérapeu-tique de conservation et/ou d'embaumement d'un corps humain ou animal mort en utilisant ladite composition, comme l'utilisation de cette composition pour des be-soins d'anatomopathologie.

**Description**

La présente invention concerne un mélange de polyoxyméthylènes dialkyl éthers de structure générale R-(OCH$_2$)$_n$-OR', appelés également POM, ayant une distribution moléculaire spécifique restreinte de n, son procédé de préparation ainsi qu'une composition ou formulation aqueuse pour la conservation du corps humain ou animal mort et/ou pour l'embaumement dudit corps, comprenant ledit mélange de POM, un biocide, un agent pro-pénétrant, un colorant, éventuellement un autre additif et de l'eau comme diluant. Elle concerne également un procédé non thérapeutique utilisant ladite composition pour la conservation du corps humain ou animal mort et/ou pour l'embaumement dudit corps.

EP1938684 A1 décrit déjà l'utilisation non-thérapeutique d'une composition comprenant I) des polyoxyméthylènes dialkyl éthers (POM) R-(OCH$_2$)$_n$OR' avec n de 1 à 8 et R, R' alkyles en C1-C5 identiques ou différents et/ou II) d'acétals de dialdéhydes, pour la conservation et l'embaumement des cadavres humains ou animaux. Aucune utilisation d'une composition spécifique de polyoxyméthylènes basée sur un mélange essentiellement basé sur des dimères (cas POME et POMM/E), trimères, tetramères et pentamères ou de dimères (cas POME et POMM/E), de trimères et de tetramères n'est divulguée ni enseignée en combinaison avec un biocide.

WO2010/001048 A1 décrit une composition comprenant au moins un POM avec n de 1 à 8 et/ou au moins un acétal de dialdéhyde et au moins un agent biocide et en option un agent pro-pénétrant pour la conservation et/ou l'embaumement de corps humains ou animaux. Aucune sélection spécifique des POM n'est divulguée ni enseignée.

WO2010/116075 A1 décrit une composition comprenant au moins un POM de n de 2 à 8 et un diol en C2-C6 pour utilisation non-thérapeutique pour la conservation et/ou l'embaumement de corps humains ou animaux. Aucune sélection spécifique de la composition des POM n'est ni divulguée ni enseignée.

Dans la formulation (composition) recherchée selon l'invention, la composition des polyoxyméthylènes dialkyl éthers doit être exempte de composés volatils de manière à prévenir l'émanation de produits volatils présentant un danger pour la sécurité, l'environnement, l'hygiène et la santé lors de leur manipulation et également elle doit être exempte de composés lourds qui affectent la fluidité de la composition aux basses températures jusqu'à <-10°C lors de sa conservation et sa dissolution dans l'eau.

Egalement, pour que la composition soit autorisée sur le marché Européen, le biocide utilisé doit être sélectionné dans la classe TP22 du règlement sur les produits biocides (RPB, règlement UE N° 528/2012) qui concerne la mise sur le marché et l'utilisation des produits biocides, qui sont utilisés pour protéger l'homme, les animaux, les matériaux ou les articles contre les organismes nuisibles, tels que les animaux nuisibles et les bactéries, par l'action des substances actives contenues dans le produit biocide. La classe TP22 se réfère spécifiquement aux fluides utilisés pour l'embaumement et la taxidermie, où les substances actives sont utilisées pour désinfecter et préserver la totalité ou certaines parties de cadavres humains ou animaux. Le biocide utilisé est sans aucune trace de formol et le taux en poids de formol dans le mélange spécifique de POM utilisé doit être inférieur à 1000 ppm poids (soit 1000 mg/kg), de préférence inférieure à 500 ppm. La composition recherchée doit avoir des performances de conservation des corps au moins équivalentes à celles obtenues avec le formol mais sans les inconvénients de toxicité du formol et sans qu'il y ait besoin de conserver les corps au froid.

Les produits biocides qui sont approuvés ou en cours d'approbation sont identifiés sur le site web de l'ECHA (echa.europa.eu/fr/information-on-chemicals/biocidal-active-substances). Spécifiquement, la liste inclut les produits suivants : Iode (CAS : 7553-56-2), Bronopol ou 2-Bromo-2-nitro-1,3-propanediol (CAS 52-51-7), Chlorure d'Alkyle (C12-C14) diméthyle benzyl ammonium (ADBAC (C12-C14)) (CAS 85409-22-9), Chlorure d'alkyl (C12-18) diméthyle benzyl ammonium (ADBAC(C12-18)) (CAS 68391-01-5), Complexe Polyvinylpyrrolidone-Iode (CAS: 25655-41-8), Chlorure d'Alkyle (C12-C14) diméthyle(ethylbenzyl) ammonium (ADEBAC (C12-C14)) (CAS 85409-23-0), Chlorure d'Alkyle (C12-C16) diméthyle benzylammonium (ADBAC/BKC (C12-C16)) (CAS 68424-85-1).

Pour des questions de sécurité, d'environnement, d'hygiène et de santé (c'est-à-dire en regard des composés volatils dangereux par rapport à leur inflammabilité ou explosivité et par rapport à leur toxicité) et de fluidité/homogénéité de la composition à basse température, <-10 °C, il y a besoin d'un point d'écoulement bas adapté par l'élimination des composés POM lourds et également il y a besoin de compositions fluides et homogènes (tous composants solubles facilement dans l'eau) à basse température et sans émission de produits volatils avec donc : a) restriction extrême du taux des composés volatils ayant un point d'ébullition inférieur à 110°C, de préférence inférieur à 120°C (mesurés à pression atmosphérique soit 101325 Pa) et b) des composés lourds ayant un point d'ébullition supérieur à 130°C, de préférence supérieur à 100°C sous une pression réduite de 1333 Pa - soit alternativement supérieur à 90°C sous pression réduite de 100 Pa, de préférence supérieur à 70°C sous pression réduite de 100 Pa, dans la composition des POM liée à ces problèmes.

Pour remédier aux inconvénients des solutions connues de l'état de la technique, concernant la conservation du corps humain ou animal mort et/ou son embaumement, la présente invention propose donc une formulation exempte de formol (on comprend par exempte de formol, une teneur inférieure à 1000 ppm (mg/kg de POM), de préférence inférieure à 500 ppm) à base d'une composition spécifique de polyoxyméthylènes dialkyl éthers (POM) ayant une distribution spécifique restreinte de n en fonction de R et R', la composition comprenant en plus dudit mélange de POM, au moins un agent biocide convenable de préférence pris dans classe biocide agréée TP 22, au moins un agent pro pénétrant, au moins un colorant, en option un autre additif et de l'eau comme diluant.

Le premier objet de l'invention concerne donc une composition aqueuse comprenant un mélange spécifique des polyoxyméthylène dialkyl éthers, un biocide, notamment sélectionné dans la liste agréée de biocides sans formol ou sans libérateurs de formol (le formol étant par définition exclu comme biocide), un agent pro pénétrant, un colorant, en option un autre additif et de l'eau comme diluant.

Un autre objet de la présente invention concerne une méthode non thérapeutique pour conserver un corps humain ou animal mort et/ou embaumer un corps mort comprenant l'administration audit corps d'une composition comme définie selon la présente invention.

Un autre objet de la présente invention concerne l'utilisation de la composition comme définie selon l'invention, pour la conservation du corps humain ou animal mort et/ou pour l'embaumement dudit corps mort.

L'invention concerne également un mélange spécifique de polyoxyméthylène dialkyl éthers (POM).

Un dernier objet de l'invention est un procédé de préparation du mélange de POM de l'invention.

Composition

Le premier objet de l'invention concerne une composition aqueuse laquelle comprend les composants suivants :

a) un mélange de polyoxyméthylène dialkyléthers (POM) choisi parmi un mélange de composés de formule générale $R\text{-}(OCH_2)_n\text{-}OR'$

avec R, R' étant identiques ou différents et choisis parmi méthyle et/ou éthyle pour au moins 90%, de préférence au moins 95% molaire du total R+R' et le reste R, R' étant des alkyles identiques ou différents choisis parmi ceux ayant de 3 à 8 carbones et représentant moins de 10%, de préférence moins de 5% molaire du total R+R', et

sous condition que :

a1) quand R=R'= méthyle, ledit mélange comprend les 3 composés avec n = 3 à 5 ou les 2 composés avec n = 3 à 4 et le poids desdits composés (avec n = 3 à 5 ou n = 3 à 4) représente au moins 95%, de préférence au moins 99% du poids total dudit mélange et

a2) quand R=R'= éthyle, ledit mélange comprend les 3 composés avec n = 2 à 4 ou les 2 composés avec n = 2 à 3 et le poids desdits composés (avec n = 2 à 4 ou n = 2 à 3) représente au moins 95%, de préférence au moins 99% du poids total dudit mélange

a3) quand R= méthyle et R'= éthyle, ledit mélange comprend les 4 composés avec n = 2 à 5 ou les 3 composés avec n = 2 à 4 et le poids desdits composés (avec n = 2 à 5 ou n = 2 à 4) représente au moins 95%, de préférence au moins 99% du poids total dudit mélange,

b) au moins un agent biocide,
c) au moins un agent pro-pénétrant,
d) au moins un colorant,
e) en option, au moins un autre additif.

et de l'eau comme diluant.

Plus particulièrement, dans ladite composition selon l'invention, le taux en poids des composants a)+b)+c)+d)+e) représente de 0,5 à 30%, de préférence de 1 à 25% et plus préférentiellement de 1 à 20% du poids total de ladite composition aqueuse.

Selon un mode de réalisation particulier, la composition selon l'invention ne comprend pas de composé autre que les composants a)+b)+c)+d)+e) et l'eau.

De préférence, ledit composant a) représente de 20 à 50%, de préférence de 30 à 40% en poids par rapport à a)+b)+c)+d)+e) et de 0,5 à 15%, de préférence de 0,8 à 8% du poids total de ladite composition aqueuse.

La composition selon l'invention comprend un composant a) qui est un mélange de POM. Le mélange de POM peut être le mélange de POM selon l'invention tel que défini ci-après.

Selon une première option particulière, ledit composant a) est un mélange selon a1) avec R=R'= méthyle avec n = 3 à 5 ou n = 3 à 4.

Selon une deuxième option particulière, ledit composant a) est un mélange selon a2) avec R=R= éthyle et avec n = 2 à 4 ou avec n = 2 à 3.

Selon une option particulière de ladite composition, ledit mélange est défini selon a3), avec R=méthyle et R'=éthyle et avec n = 2 à 5 ou n = 2 à 4.

Le mélange de POM peut être préparé par le procédé de préparation du mélange de POM selon l'invention décrit ci-après.

Les mélanges de POM selon l'invention peuvent être préparés par un procédé comprenant les étapes suivantes :

1) Réaction : Un mélange de POM, le plus souvent méthylal et/ou éthylal, voire des POMs des rangs inférieurs et supérieurs des synthèses précédentes (c'est-à-dire les têtes et les pieds de distillation), et d'une source de formaldéhyde de préférence anhydre, telle que du trioxanne, tetraoxanne ou du paraformaldéhyde, est mis au contact d'un catalyseur acide. Il peut s'agir d'un acide de Bronsted ou de Lewis. Le ratio molaire entre les groupements alcoxy(alcools) des acétals de départ et les unités $CH_2O$ des sources de formaldéhyde est de préférence compris entre 2/1 et 2/10. Pour faciliter la dissolution de paraformaldéhyde une addition d'alcoolate de sodium ou de potassium, ou d'un hydroxyde de sodium ou de potassium peut être nécessaire. Les catalyseurs qui conviennent pour cette réaction sont des catalyseurs hétérogènes qui sont facile à filtrer à l'issu de la réaction. Parmi les catalyseurs qui peuvent être utilisés, on peut notamment citer les résines acides telles que les résines acides de type Amberlyst[R] et Lewatit[R], les acides de Lewis de métaux tels que Aluminium, Fer, Bore, antimoine, Zinc, Etain, Titane soit par exemple $BF_3$, $BF_3$-$OEt_2$, $TiCl_4$, $NbCl_5$, $SnBr_4$, $SnCl_2$, $SnCl_4$, $SbF_5$, $(C_6H_5)_3C^+SbF_6^-$, $SbCl_5$, $Et_3O^+SbCl_6^-$), Zéolithe HZSM5, Zéolithe HY, $H_2SO_4$, acide méthane sulfonique, acide paratoluène sulfonique, Nafion[R], etc. La réaction est effectuée à basse température (c'est-à-dire à une température inférieure à 100°C et sous une pression comprise entre la pression atmosphérique et 6,1 Bars soit 610000 Pa). La réaction est effectuée en mode batch ou en mode continu. Dans la configuration batch, de préférence le catalyseur est agité avec la solution, mais il peut aussi être mis dans un panier grillagé, lui-même mis en rotation dans le réacteur. Dans le mode continu, le catalyseur est de préférence placé en lit fixe. Le liquide réactionnel contenant les acétals ou polyacétals (POMs) de départ et la source de formaldéhyde traverse le lit de catalyseur de haut en bas ou de bas en haut. De préférence le liquide traverse le lit de catalyseur de bas en haut, et les grains de catalyseurs gardent une mobilité dans le lit de catalyseur.

2) Neutralisation (optionnelle) : Le liquide réactionnel séparé de son catalyseur, est alors lavé avec une solution de soude de manière à éliminer les traces d'acide résiduel. On utilise pour cela une solution aqueuse de soude, ou éventuellement une solution méthanolique de soude, du méthylate de sodium ou de potassium, une solution de soude dans du méthylal, ou de la soude anhydre. On peut aussi utiliser d'autres bases telles que de la potasse, de la chaux, une solution d'ammoniaque...

3) Evaporation : le produit brut obtenu contient systématiquement une distribution de POMs de tous les rangs, c'est-à-dire des rangs n=1 à l'infini, cependant les rangs supérieurs à n=8 sont difficilement quantifiables du fait des très faibles teneurs obtenues. Dans le brut de synthèse, les POM des rangs inférieurs représentent l'essentiel de la masse. Il est nécessaire de procéder à une évaporation de manière à éliminer les POMs les plus légers du mélange de synthèse. Etant donné qu'il s'agit des POMs légers, ils peuvent être évaporés à pression atmosphérique, ou sous pression réduite à plus basse température, par exemple à une température inférieure à 110°C, de préférence inférieure à 120°C à pression atmosphérique, ou sous une pression totale absolue supérieure à 27 000 Pa à 70°C ou de préférence une pression totale supérieure à 13500 Pa pour une température de 50°C. L'homme de l'art peut facilement sélectionner le couple de température-pression qui correspond aux molécules que l'on souhaite évaporer. Ces POMs légers contribuent non seulement aux émissions de COV (composés organiques volatils), mais aussi aux perceptions d'odeurs de solvants, ainsi qu'à l'abaissement du point éclair du mélange lorsqu'ils sont présents dans le mélange des POMs. Il est donc nécessaire d'en éliminer tout ou partie. Les POMs de rangs inférieurs sont cependant de bons solvants des POMs des rangs supérieurs. Ils se solubilisent aussi plus facilement dans l'eau. Il est donc alors nécessaire d'éliminer aussi les POMs des rangs supérieurs.

4) Distillation : Le mélange étêté obtenu précédemment est alors évaporé sous vide partiel, afin de distiller les POMs des rangs immédiatement supérieurs et de garder en pied de distillation les plus lourds. Il est cependant nécessaire de ne pas chauffer à une température trop élevée le mélange des POMs qui pourraient se dégrader. La distillation est donc effectuée sous vide partiel. Le niveau de vide et la température de distillation sont ajustés de manière à distiller les POMs de longueur de chaine ciblée.

5) Recyclage têtes et Pieds : Les têtes et les pieds de distillation dans les étapes précédentes peuvent représenter des fractions importantes, supérieures à 50% pds (en tenant compte des méthylal et éthylal qui doivent être recyclés) et bien souvent supérieures à 75% pds du mélange réactionnel. Ces fractions ne sont pas perdues. Elles peuvent être utilisées comme matières premières à la synthèse des POMs. Il est cependant important de connaitre les proportions de composés en présence afin d'ajuster au mieux la quantité de source de formaldéhyde nécessaire à la réaction. On maintient ainsi une quantité de formaldéhyde calculée comme suit : Somme$(n*POM_n)+m*(CH_2O)_m$/(Somme$(POM_n)$ avec $POM_n$ moles de POM de rang n, $(CH_2O)_m$ est trioxanne quand m=3 et $(CH_2O)_m$ représente le nombre de moles de trioxanne, m=4 pour tetraoxanne ou Paraformaldéhyde quand m est plus grand, telle que cette quantité reste comprise entre 2 et 11, de préférence entre 2 et 4.

6) Analyses : Le produit obtenu lors des synthèses est analysé par chromatographie. On mesure aussi les points d'ébullition pour vérifier que le produit est conforme. Lors de cette mesure, le produit est distillé en faisant varier le niveau de vide à température constante.

La composition selon l'invention comprend un composant biocide b).

Le composant biocide b) peut notamment comprendre un agent biocide sélectionné dans la liste agréée de biocides sans formol ou sans libérateurs de formol (le formol étant par définition exclu comme biocide).

Le composant biocide b) peut notamment comprendre un agent biocide tel que défini selon la directive no 98/8/CE du 16 février 1998 : « toute substance ou tout mélange, sous la forme dans laquelle il est livré à l'utilisateur, constitué d'une ou plusieurs substances actives, en contenant ou en générant, qui est destiné à détruire, repousser ou rendre inoffensifs les organismes nuisibles, à en prévenir l'action ou à les combattre de toute autre manière par une action autre qu'une simple action physique ou mécanique ».

En particulier, le composant biocide b) peut comprendre un biocide pris dans classe biocide agréée TP 22 du règlement sur les produits biocides (RPB, règlement UE N° 528/2012) qui concerne la mise sur le marché et l'utilisation des produits biocides, qui sont utilisés pour protéger l'homme, les animaux, les matériaux ou les articles contre les organismes nuisibles, tels que les animaux nuisibles et les bactéries, par l'action des substances actives contenues dans le produit biocide. La classe TP22 se réfère spécifiquement aux fluides utilisés pour l'embaumement et la taxidermie, où les substances actives sont utilisées pour désinfecter et préserver la totalité ou certaines parties de cadavres humains ou animaux.

Ledit composant biocide b) peut être est choisi parmi : Iode (CAS# 7553-56-2); Polyvinylpyrolidone iodée (complexe polyvinylpyrolidone-iode) (CAS# 25655-41-8) ; Bronopol ou 2-Bromo-2-nitro-1,3-propanediol (CAS# 52-51-7) ; Chlorure d'alkyl (C12-C18) diméthyl benzyl ammonium (ADBAC (C12-18) (CAS# 68391-01-5) ; Chlorure d'alkyl (C12-C16) diméthyl benzyl ammonium (ADBAC/BKC (C12-16) (CAS# 68424-85-1) ; Chlorure d'alkyl (C12-C14) diméthyl benzylammonium (ADBAC (C12-14) (CAS# 85409-22-9) ; Chlorure d'alkyl (C12-C14) Diméthyl Ethyl benzyl ammonium (ADEBAC (C12-14) (CAS# 85409-23-0); Glutaraldéhyde (CAS# 111-30-8) ; Ethanol (CAS# 64-17-5); Acide peracétique (CAS# 79-21-0) ; peroxyde de méthyl éthyl cétone (CAS# 1338-23-4) ; Butanedial (CAS# 638-37-9) ; Diéthyl acétal (CAS# 105-57-7); Glyoxal (107-22-2); Diéthylène glycol (CAS# 111-46-6) ; acides organiques tels que acide ascorbique (CAS# 50-81-7) ou acide citrique (CAS# 77-92-9) ; Phénoliques tels que l'aldéhyde vanilique (CAS# 121-33-5), le gaïacol (CAS# 90-05-1), l'eugénol (CAS# 97-53-0) ; Phénol (CAS# 108-95-2) ; methylparabène (CAS# 99-76-3) ; propylparabène (CAS# 94-13-3) ; Chlorure de 1-hexadécylpyridinium (CAS# 123-03-5) ; un composé de formule $(C_3H_4O)n.(C_3H_4O_2)m$ où n>m tel que le Chemyde$^R$ de la société Chemeq CAS# (28349-72-6), et leurs mélanges.

Plus préférentiellement, ledit composant biocide b) est choisi parmi : Iode (CAS# 7553-56-2) ; Polyvinylpyrolidone iodée (complexe polyvinylpyrolidone-iode) (CAS# 25655-41-8) ; Bronopol (CAS# 52-51-7) ; Chlorure d'alkyl (C12-C18) diméthyl benzyl ammonium (ADBAC (C12-18) (CAS# 68391-01-5) ; Chlorure d'alkyl (C12-C16) diméthyl benzyl ammonium (ADBAC/BKC (C12-16) (CAS# 68424-85-1); Chlorure d'alkyl (C12-C14) diméthyl benzyl ammonium (ADBAC (C12-14) (CAS# 85409-22-9) ; Chlorure d'alkyl (C12-C14) Diméthyl Ethyl benzyl ammonium (ADEBAC (C12-14) (CAS# 85409-23-0); Glutaraldéhyde (CAS# 111-30-8) ; un composé de formule $(C_3H_4O)n.(C_3H_4O_2)m$ où n>m tel que le Chemyde$^R$ de la société Chemeq, et leurs mélanges.

La composition selon l'invention comprend un composant pro-pénétrant c).

Le composant pro-pénétrant c) peut comprendre un composé qui facilite le passage des composants de la composition selon l'invention à travers la barrière cutanée.

Ledit composant pro-pénétrant c) peut être choisi parmi : Propylène glycol (CAS# 57-55-6) ; Monoéthylène glycol (CAS# 107-21-1) ; Glycérol (CAS# 56-81-5) ; Propanol-2 (CAS# 67-63-0) ; diméthylsulfoxyde (CAS# 67-68-5) ; polyéthylèneglycol (CAS# 25322-68-3) ; 2-éthoxyéthanol (CAS# 110-80-5) ; 2-phénoxyéthanol (CAS# 122-99-6) ; alcool tétrahydrofurfurylique (CAS# 97-99-4) ; un mono-alcool linéaire ou ramifié en $C_2$-$C_6$ ; un glycol tel que propanediol-1,3 ; Butanediol-1,4, Butanediol-1,3, Butanediol-2,3, hexylèneglycol ; un acide gras en $C_8$-$C_{22}$ ; une cyclodextrine ; un tensioactif ; un acétate d'alkyle en $C_1$-$C_4$ , un mono- ou polyester d'acide gras et de glycérol ou de propylène glycol, un ester d'alcool gras d'acide lactique ou d'acide glycolique, un ester d'acide gras et d'isopropyle ; un alcool gras en $C_8$-$C_{18}$ ; un azone ; un N,N-dialkylamino-alcanoate d'alkyle ; un amide ; de l'urée ; un dérivé d'urée ; un terpène ; un terpénoïde ; le nicotinate de méthyle ou de benzyle ; un sulfoxyde ; l'isosorbide ; et leurs mélanges.

Au sens de la présente invention, le terme « un azone » signifie l'azone (1-dodécylazacycloheptan-2-one ou laurocaprame) ou un dérivé d'azone. Un dérivé d'azone est un composé ayant un hétérocycle non-aromatique comprenant 4 à 6 atomes de carbone et au moins un atome d'azote.

Au sens de la présente invention, le terme « un dérivé d'urée » signifie un composé comprenant une liaison urée -NH-C(=O)-NH-.

De préférence, ledit composant pro-pénétrant c) est choisi parmi : Propylène glycol (CAS# 57-55-6) ; Monoéthylène glycol (CAS# 107-21-1) ; Glycérol (CAS# 56-81-5) ; Propanol-2 (CAS# 67-63-0) ; diméthylsulfoxyde (CAS# 67-68-5) ; et leurs mélanges.

De préférence, ladite composition comprend :

- de 0,5 à 10%, de préférence de 0,8 à 8%, en poids de composant a) par rapport au poids total de la composition aqueuse

- de 0,1 à 3%, de préférence de 0,15 à 2%, en poids de composant b) par rapport au poids total de la composition aqueuse
- de 0,5 à 10%, de préférence de 0,8 à 8%, en poids de composant c) par rapport au poids total de la composition aqueuse
- de 0,1 à 8%, de préférence de 0,2 à 5%, en poids de composant d) par rapport au poids total de la composition aqueuse.

La composition selon l'invention comprend un composant colorant d).

Un colorant est une substance qui modifie la couleur de la composition selon l'invention. Un colorant peut notamment comprendre un groupe chromophore. Le colorant peut notamment être un colorant azo, anthraquinone, nitroso, indigoïque, triarylméthane, xanthène, acridine, thiazine, phtalocyanine, thiazole, oxazine, quinoléine ou carotène.

De préférence, le colorant est soluble en phase aqueuse. De manière plus préférentielle, le colorant est un colorant alimentaire.

Des exemples de colorants convenables sont l'éosine, l'acide carminique, l'érythrosine, le Rouge allura AC (ou 6-hydroxy-5-[(2-méthoxy-5-méthyl-4-sulfophényl)azo]-2-naphtalénesulfonate de disodium).

La composition selon l'invention comprend éventuellement un composant additif e).

Ledit au moins un autre additif peut être sélectionné parmi : parfum, en particulier un parfum naturel ou synthétique, par exemple des extraits de fleur comme la rose (huile de rose) ou le lilas et des esters aromatiques, de préférence avec des notes fraiches comme l'eucalyptus ; du borax (EC Number 215-540-4) ; nitrate de potassium (CAS# 7757-79-1) ; acide borique (CAS# 10043-35-3) ; citrate de sodium (CAS# 68-04-2) ; sodium hexamétaphosphate (CAS# 10124-56-8) ; acétate de sodium (CAS 127-09-3) ; acide chlorhydrique (CAS# 7647-01-0) ; Oxyde de bis(tributylétain) (CAS# 56-35-9) ; phosphate de sodium dibasique (CAS 7558-79-4) ; phosphate de sodium monobasique (CAS# 7558-80-7) ; acide éthylènediamine tétracétique (EDTA) (CAS# 60-00-4) ; alkylsulfonate de sodium (CAS# 85711-69-9) ; carbonate de potassium (CAS# 584-08-7); trichloroacétaldéhyde (CAS# 302-17-0) ; et leurs mélanges.

## Procédé et utilisation

Le deuxième objet de l'invention concerne un procédé non thérapeutique pour conserver un corps humain ou animal et/ou embaumer un corps mort, ledit procédé comprenant l'administration audit corps d'une composition comme définie ci-avant selon l'invention.

Selon une option particulière dudit procédé de l'invention, ladite composition est injectée par voie intra-artérielle dans ledit corps.

Selon une autre option particulière dudit procédé de l'invention, ladite composition est perfusée dans ledit corps.

Selon une troisième option particulière dudit procédé de l'invention, ladite composition est appliquée par voie topique sur ledit corps.

Un dernier objet couvert par la présente invention concerne l'utilisation de la composition telle que définie selon l'invention, pour la conservation du corps humain ou animal mort, et/ou pour l'embaumement dudit corps mort ou l'utilisation pour des besoins d'anatomopathologie.

Selon une option particulière, ladite utilisation concerne la conservation d'organes, de tissus ou de cellules d'un organisme/corps humain ou animal vivant ou mort, par immersion desdits organes, tissus ou cellules dans (ou perfusion avec) la composition telle que définie ci-avant selon l'invention, pour des besoins d'anatomopathologie.

L'« anatomopathologie » dans le contexte de l'invention est la spécialité médicale qui concerne l'examen des organes, des tissus ou des cellules d'un organisme/corps humain ou animal vivant ou mort, pour repérer et analyser des anomalies liées à une maladie.

Plus particulièrement selon cette utilisation, ladite composition est utilisée pour ladite conservation et/ou pour ledit embaumement dudit corps selon une des méthodes suivantes :

- injection de ladite composition par voie intra-artérielle dans ledit corps
- perfusion de ladite composition dans ledit corps
- application de ladite composition sur ledit corps par voie topique.

## Mélange de POM

Le mélange de POM selon l'invention est un mélange de composés de formule générale $R-(OCH_2)_n-OR'$ avec R, R' étant identiques ou différents et choisis parmi méthyle et/ou éthyle pour au moins 90%, de préférence au moins 95%, molaire du total R+R' et le reste R, R' étant des alkyles identiques ou différents choisis parmi ceux ayant de 3 à 8 carbones et représentant moins de 10%, de préférence moins de 5%, molaire du total R+R', et sous condition que :

a1) quand R=R'= méthyle, ledit mélange comprend les 3 composés avec n = 3 à 5 ou les 2 composés avec n = 3 à 4 et le poids desdits composés avec n = 3 à 5 ou n = 3 à 4 représente au moins 95%, de préférence au moins 99%, du poids total dudit mélange et

a2) quand R=R'= éthyle, ledit mélange comprend les 3 composés avec n = 2 à 4 ou les 2 composés avec n = 2 à 3 et le poids desdits composés avec n = 2 à 4 ou n = 2 à 3 représente au moins 95%, de préférence au moins 99%, du poids total dudit mélange

a3) quand R= méthyle et R'= éthyle, ledit mélange comprend les 4 composés avec n = 2 à 5 ou les 3 composés avec n = 2 à 4 et le poids desdits composés avec n = 2 à 5 ou n = 2 à 4 représente au moins 95%, de préférence au moins 99%, du poids total dudit mélange,

Selon une première option particulière, le mélange de POM selon l'invention est un mélange selon a1) avec R=R'= méthyle avec n = 3 à 5 ou n = 3 à 4. Un tel mélange peut être respectivement désigné comme $POMM_{3-5}$ ou $POMM_{3-4}$.

Selon une deuxième option particulière, le mélange de POM selon l'invention est un mélange selon a2) avec R=R= éthyle et avec n = 2 à 4 ou avec n = 2 à 3. Un tel mélange peut être respectivement désigné comme $POME_{2-4}$ ou $POME_{2-3}$.

Selon une autre option particulière, le mélange de POM selon l'invention est un mélange selon a3), avec R=méthyle et R'=éthyle et avec n = 2 à 5 ou n = 2 à 4. Un tel mélange peut être respectivement désigné comme $POMM/E_{2-5}$ ou $POMM/E_{2-4}$.

Le mélange de POM selon l'invention est avantageusement exempt de composés volatils, de préférence exempt de composés volatils dangereux.

Selon un mode de réalisation préféré, le mélange de POM selon l'invention est exempt de formol. Ainsi, le mélange de POM peut contenir moins de 1000 ppm de formol (moins de 100 mg de formol/kg de mélange de POM).

Le mélange de POM selon l'invention est avantageusement exempt de composés lourds.

Au sens de la présente invention, le terme « composés volatils » signifie les composés ayant un point d'ébullition inférieur à 110°C (mesuré à pression atmosphérique soit 101325 Pa).

Au sens de la présente invention, le terme « composés volatils dangereux » signifie les composés volatils classés comme cancérogènes, mutagènes et/ou tératogènes, tel que par exemple le formol.

Au sens de la présente invention, le terme « composés lourds » signifie les composés ayant un point d'ébullition supérieur à 130°C mesuré sous une pression réduite de 1333 Pa soit alternativement supérieur à 90°C sous pression réduite de 100 Pa, de préférence supérieur à 70°C sous pression réduite de 100 Pa.

Au sens de la présente invention, le terme « mélange (ou composition) exempt(e) de composé X » signifie un mélange (ou une composition) comprenant moins de 10%, ou moins de 5%, ou moins de 2%, ou moins de 1%, ou moins de 0,5%, ou moins de 0,1%, ou moins de 0,01%, ou encore 0%, en poids de composé X par rapport ou poids du mélange (ou de la composition).

Procédé de préparation du mélange de POM

Le mélange de POM selon l'invention peut être préparé par un procédé comprenant les étapes suivantes :

a) réaction d'un mélange de POM de départ et d'une source de formaldéhyde en présence d'un catalyseur acide, dans laquelle le mélange de POM de départ est représenté par la formule générale $R_1-(OCH_2)_n-OR_1'$ avec $R_1$ et $R_1'$, identiques ou différents, sont choisis parmi un alkyle ayant de 1 à 8 atomes de carbone, et n = 1 à l'infini ;

b) éventuellement séparation du catalyseur acide du milieu réactionnel ;

c) éventuellement neutralisation du milieu réactionnel ;

d) évaporation des POM légers de formule générale $R-(OCH_2)_n-OR'$ avec n = 1 et/ou 2 lorsque R et R' = méthyle ou avec n = 1 lorsque R = éthyle et R' = méthyle ou éthyle ;

e) distillation pour éliminer les POM lourds de formule générale $R-(OCH_2)_n-OR'$ avec n > 5 lorsque R = méthyle et R' = méthyle ou éthyle ou avec n > 4 lorsque R et R' = éthyle ;

f) éventuellement recyclage des POM légers et/ou des POM lourds dans l'étape a).

Le mélange de POM de départ de l'étape a) peut notamment comprendre du méthylal et/ou de l'éthylal et éventuellement des POM de recyclage provenant de l'étape f) (i.e. POM légers provenant de l'étape d) et/ou POM lourds provenant de l'étape e)).

La source de formaldéhyde de l'étape a) peut notamment être anhydre. De préférence la source de formaldéhyde est choisie parmi trioxanne, tetraoxanne, paraformaldéhyde et leurs mélanges. Pour faciliter la dissolution de paraformaldéhyde une addition d'alcoolate de sodium ou de potassium, ou d'un hydroxyde de sodium ou de potassium peut être nécessaire.

De préférence, dans l'étape a) le ratio molaire entre les groupements alcoxy(alcools) des POM de départ et les unités -($CH_2O$)- de la source de formaldéhyde va de 2/1 à 2/10.

Le catalyseur acide de l'étape a) peut être un acide de Bronsted ou de Lewis. De préférence, le catalyseur acide est un catalyseur hétérogène. L'utilisation d'un catalyseur hétérogène permet avantageusement de faciliter la séparation du catalyseur du milieu réactionnel, notamment par filtration. Parmi les catalyseurs qui peuvent être utilisés, on peut notamment citer les résines acides telles que les résines acides de type Amberlyst[R] et Lewatit[R], les acides de Lewis de métaux tels que Aluminium, Fer, Bore, antimoine, Zinc, Etain, Titane soit par exemple $BF_3$, $BF_3$-$OEt_2$, $TiCl_4$, $NbCl_5$, $SnBr_4$, $SnCl_2$, $SnCl_4$, $SbF_5$, $(C_6H_5)_3C^+SbF_6^-$, $SbCl_5$, $Et_3O^+SbCl_6^-$, Zéolithe H-ZSM-5, Zéolithe HY, $H_2SO_4$, acide méthane sulfonique, acide paratoluène sulfonique and Nafion[R].

La réaction de l'étape a) peut être effectuée à basse température (c'est-à-dire à une température inférieure à 100°C et sous une pression comprise entre la pression atmosphérique et 6,1 Bars soit 610000 Pa). La réaction de l'étape a) peut être effectuée en mode batch ou en mode continu. Dans la configuration batch, de préférence le catalyseur est agité avec la solution, mais il peut aussi être mis dans un panier grillagé, lui-même mis en rotation dans le réacteur. Dans le mode continu, le catalyseur est de préférence placé en lit fixe. Le liquide réactionnel contenant le mélange de POM de départ et la source de formaldéhyde peut traverser le lit de catalyseur de haut en bas ou de bas en haut. De préférence le liquide traverse le lit de catalyseur de bas en haut, et les grains de catalyseurs gardent une mobilité dans le lit de catalyseur.

L'étape optionnelle b) de séparation peut être effectuée par filtration ou centrifugation lorsque le catalyseur acide est dispersé dans le milieu réactionnel. Alternativement, si le catalyseur acide est contenu dans un panier grillagé, il suffit d'enlever le panier grillagé du réacteur. Lorsque la réaction est réalisée en mode continu avec un catalyseur acide en lit fixe, l'étape de séparation n'est pas nécessaire puisque le catalyseur reste piégé dans le lit fixe.

L'étape optionnelle c) de neutralisation peut être réalisée avec une base de manière à éliminer les traces d'acide résiduel. La base peut être choisie parmi une solution aqueuse de soude, une solution méthanolique de soude, du méthylate de sodium ou de potassium, une solution de soude dans du méthylal, de la soude anhydre, de la potasse, de la chaux et une solution d'ammoniaque.

L'étape d) d'évaporation permet d'éliminer tout ou partie des POM légers. Les POM légers sont évacués en tête de l'unité d'évaporation. L'évaporation peut être réalisée avec une unité d'évaporation choisie parmi un évaporateur rotatif et/ou une colonne de distillation. L'évaporation peut être réalisée en une étape ou en plusieurs étapes successives. L'évaporation peut être réalisée à pression atmosphérique ou sous pression réduite. Par exemple, l'évaporation peut être réalisée en chauffant le mélange à une température inférieure à 120°C, de préférence inférieure à 110°C, à pression atmosphérique, ou en chauffant à 70°C sous une pression totale supérieure à 27 000 Pa, ou de préférence en chauffant à 50°C sous une pression totale supérieure à 13500 Pa. L'homme de l'art peut facilement sélectionner le couple de température-pression qui correspond aux molécules que l'on souhaite évaporer.

L'étape e) de distillation permet d'éliminer tout ou partie des POM lourds. Les POM lourds restent en pied de distillation et le mélange de POM souhaité est recueilli en tête de distillation. La distillation est préférentiellement réalisée sous vide partiel. La température de chauffage est avantageusement maintenue en dessous de 120°C. En effet, un chauffage supérieur à 120°C pourrait dégrader le mélange de POM. Le niveau de vide et la température de chauffage sont ajustés de manière à distiller les POMs de longueur de chaine ciblée.

L'étape f) de recyclage permet de réintroduire les POM légers éliminés à l'étape d) et/ou les POM lourds éliminés à l'étape e) en début du procédé. Les POM légers et les POM lourds peuvent représenter des fractions importantes, notamment supérieures à 50% en poids, et bien souvent supérieures à 75% en poids du mélange réactionnel. Ces fractions peuvent être utilisées comme matières premières de la synthèse du mélange de POM selon l'invention. Il est cependant important de connaitre les proportions de composés en présence afin d'ajuster au mieux la quantité de source de formaldéhyde nécessaire à la réaction. On peut calculer la quantité molaire de formaldéhyde nécessaire comme suit :

$$[Somme(n*POM_n) + m*(CH_2O)_m]/[Somme(POM_n)]$$

avec

POM$_n$ = nombre de moles de POM de rang n
$(CH_2O)_m$ = nombre de moles de source de formaldéhyde
n = nombre d'unités -($CH_2O$)- dans chaque POM
m = nombre d'unités -($CH_2O$)- dans la source de formaldéhyde (m = 3 pour le trioxanne, m = 4 pour le tétraoxanne et m = 5 à 100 pour le paraformaldéhyde)

telle que cette quantité reste comprise entre 2 et 11, de préférence entre 2 et 4.

Les exemples suivants sont présentés pour illustrer l'invention et ses performances et ne limitent pas la portée de sa couverture définie par les revendications ci-après.

**Exemples**

1) Matières premières utilisées

Toutes les matières premières utilisées en synthèse et en application sont présentées au tableau récapitulatif 1 ci-dessous.

Matières premières utilisées en synthèse et en formulation d'application

[Tableau 1]

| Matière première | Nom ou nature chimique | Fonction technique selon invention |
|---|---|---|
| **Synthèse** | | |
| Methylal | $CH_3\text{-}OCH_2\text{-}OCH_3$ | Matière première |
| Ethvlal | $CH_3CH_2OCH_2OCH_2CH_3$ | Matière première |
| Paraformaldéhyde | $(CH_2O)_n$ | Matière première |
| Trioxane | $(CH_2O)_3$ | Matière première |
| Résine Amberlyst[R] | A15 (de chez Dow/Röhm & Haas) | Catalyseur |
| **Formulation application** | | |
| POMs | $R\text{-}(OCH_2)_n\text{-}OR'$ | Composant a) voir exemples synthèse |
| (ADBAC / BKC (C12-16)  CAS# 68424-85-1 | Chlorure d'alkyl (C12-16) diméthyl benzyl Ammonium | Biocide b) |
| (ADBAC (C12-14)) CAS#85409-22-9 | Chlorure d'Alkyl (C12-14) diméthyl benzyl ammonium | Biocide b) |
| (ADBAC (C12-18))  CAS# 68391-01-5 | Chlorure d'alkyl (C12-18) diméthyl benzyl ammonium | Biocide b) |
| (ADEBAC (C12-14)) CAS# 85409-23-0 | Chlorure d'alkyl (C12-14) diméthyl éthyl benzyl ammonium | Biocide b) |
| Propylène qlvcol | $CH_2(OH)\text{-}CH(OH)\text{-}CH_3$ | Propénétrant c) |
| Borax | | Additif e) |
| Glycérine | $CH_2(OH)CH(OH)CH_2(OH)$ | Propénétrant c) |
| Nitrate de potassium | $KNO_3$ | Additif e) |
| Colorant | Eosine | Colorant d) |
| Parfum | Essence de Rose | Additif e) |

**Préparation de POMM (R = R' : méthyle) et POME (R = R' = éthyle)**

**Exemple 1 synthèse** : Préparation de POMM$_{2-8}$ ($R\text{-}(CH_2O)_n\text{-}OR'$ ou n = 2 à 8 et R= R'= méthyle)

Dans un réacteur Schott double-enveloppe de 500 ml muni d'une agitation mécanique, d'un réfrigérant et d'une sonde de température, on charge 100 g de méthylal - aussi appelé diméthoxyméthane - (1,32 mol) et 30 g de trioxanne (1 mol). On ajoute 5 g de résine Amberlyst[R] A15 préalablement lavée au méthanol et séchée sous vide. On chauffe à 50°C et on laisse réagir 1 heure. Le mélange réactionnel est filtré, puis lavé avec 10 g d'une solution aqueuse de soude à 15% pds. Le méthylal est éliminé par évaporation sous pression réduite (90°C, 650 mbar (65000 Pa absolus) mesurés au niveau de l'évaporateur) à l'évaporateur rotatif. On obtient 55 g d'une coupe $POMM_{2-8}$ ($CH_3$-$(CH_2O)_n$-$OCH_3$ où n vaut 2 à 8.

La répartition des masses du produit obtenu est déterminée par analyse CPG comme présentée dans le tableau 2. L'analyse est faite sur un chromatographe Agilent 5890 équipé d'un passeur d'échantillon Agilent, d'un injecteur Split et d'un détecteur FID. On utilise une colonne OV1701 (14% cyanopropylméthylméthylpolysiloxane), de longueur 30 m, de diamètre de 0,25 mm, avec une épaisseur de film de 0,25 $\mu$m. Le split est de 46 mL/min, 1$\mu$L est injecté, la pression de la colonne est de 5 psi (34474 Pa relatifs), la température du four est programmée de 50°C pendant 5 minutes, puis une rampe de 10°C/min jusque 250°C, puis maintenue 15 minutes. La température de l'injecteur est de 200°C, celle du détecteur de 270°C. Une séparation satisfaisante des produits est ainsi obtenue.

**Exemple synthèse 2** : Préparation du $POMM_{3-8}$ avec n=3 à 8 et R= R' = méthyle

Dans un réacteur Schott double-enveloppe de 500 ml muni d'une agitation mécanique, d'un réfrigérant et d'une sonde de température, on charge 100 g de méthylal (aussi appelé diméthoxyméthane - $CH_3$-$OCH_2$-$OCH_3$) (1,32 mol) et 30 g de trioxanne (1 mol). On ajoute 5 g de résine Amberlyst[R] A15 préalablement lavée au méthanol et séchée sous vide. On chauffe à 50°C et on laisse réagir 1 heure. Le mélange réactionnel est filtré, puis lavé avec 10 g d'une solution aqueuse de soude à 15% pds. Le méthylal est éliminé par évaporation sous pression réduite (90°C, 600 mBar (60 000 Pa) mesurés au niveau de l'évaporateur) à l'évaporateur rotatif, puis le $POMM_2$ et l'eau résiduelle sont ensuite éliminés par distillation sous vide (colonne de type Oldershaw à 10 plateaux) en opérant à une pression de 200 mBar (20 000 Pa) à 90°C. On obtient 32 g d'une coupe $POMM_{3-8}$ ($CH_3$-$(CH_2O)_n$-$OCH_3$ où n vaut 3 à 8).
La répartition des masses du produit obtenu est déterminée par analyse CPG comme présentée dans le tableau 2.

**Exemple synthèse 3** : Préparation du $POMM_{3-4}$ avec n = 3 à 4 et R= R' = méthyle

Sur le produit de l'exemple de synthèse 2, on récolte la coupe de distillation entre 60°C sous 65 mBars (6500 Pa) et 90°C sous 10 mbar (1000 Pa) correspondant au $POMM_{3-4}$ où n vaut 3-4.

**Exemple de synthèse 4** : Préparation du $POMM_{3-5}$ avec n = 3 à 5 et R= R' = méthyle

Sur le produit de l'exemple de synthèse 2, on récolte la coupe de distillation entre 60°C sous 65 mBars (6500 Pa) (mesurés au niveau de la colonne) et 86°C sous 1 mbar (100 Pa) correspondant au $POMM_{3-5}$.

**Exemple de synthèse 5** : préparation du $POME_{2-8}$ avec n = 2 à 8 et R=R'= éthyle

Le mode opératoire est identique à celui de l'exemple de synthèse 2 en utilisant 137 g d'éthylal - diéthoxyméthane ($CH_3CH_2$-$OCH_2$-$OCH_2CH_3$)- (1,32 mol), 30 g de trioxanne (1 mol) et 7 g de résine Amberlyst[R] A15. Après réaction, le catalyseur est filtré, le produit est neutralisé à la soude pour éliminer toute trace d'acide, puis les fractions légères sont évaporées sous un vide partiel de 65 mBars (6500 Pa) à 60°C.
On obtient un mélange $C_2H_5$-$(CH_2O)_n$-$C_2H_5$ avec n de 2 à 8 (R= R' = éthyle). La répartition des masses du produit obtenu est déterminée par analyse CPG comme présentée dans le tableau 3.

**Exemple de synthèse 6** : Préparation de $POME_{2-4}$, avec n= 2 à 4 et R=R'= éthyle

Sur le produit de l'exemple de synthèse 5, on récolte la coupe de distillation jusque 79°C sous 1 mBar (100 Pa) correspondant au $POME_{3-4}$.

**Exemple de synthèse 7** : Préparation de $POME_{2-3}$, avec n= 2 à 3 et R=R'= éthyle

Sur le produit de l'exemple de synthèse 5, on récolte la coupe de distillation à 79°C sous 13 mBar (1300 Pa) correspondant au $POME_{2-3}$.

**Exemple de synthèse 8** : préparation d'un mélange de composés POMM$_{3-5}$ (n = 3 à 5 et R=R'=méthyle) + POME$_{2-4}$ (n = 2 à 4 et R=R'=éthyle) + POMM/E$_{2-5}$ (n = 2 à 5 et R=méthyle et R'=éthyle) à partir d'un mélange réactionnel méthylal/éthylal= 75 / 25 en moles

Dans un réacteur Schott double-enveloppe de 1 L muni d'une agitation mécanique, d'un réfrigérant et d'une sonde de température, on charge 271 g de méthylal (3,57 mol), 122 g d'éthylal (1,17 mol) et 107 g de trioxane (3,57 mol CH$_2$O). On ajoute 25 g de résine Amberlyst$^R$ A15 préalablement lavée au méthanol et séchée sous vide. On chauffe à 50°C et on laisse réagir 1 heure. Le mélange réactionnel est filtré, puis lavé avec 100 g d'une solution aqueuse de soude à 15% pds. Le produit est rectifié par évaporation sous pression réduite à l'évaporateur rotatif 60°C, sous 100 mBar (10 000 Pa).

On obtient 180 g d'un mélange de composés de formule : CH$_3$-(CH$_2$O)$_n$-OCH$_3$ (n = 3 à 8 ou POMM$_{3-8}$ (n = 3 à 8 et R=R'=méthyle), de formule C$_2$H$_5$-(CH$_2$O)$_n$-C$_2$H$_5$ ou POME$_{2-8}$ (n=2 à 8 et R=R'=éthyle) et de formule CH$_3$-(CH$_2$O)$_n$-OC$_2$H$_5$ POMM/E$_{2-8}$ (n = 2 à 8 et R=méthyle et R'=éthyle).

Le produit est ensuite distillé sous vide à l'aide d'un évaporateur à film tombant raclé sous un vide de 1 mBar (100 Pa) à 90°C. On obtient 167 g d'un mélange essentiellement de composés de formule : CH$_3$-(CH$_2$O)$_n$-OCH$_3$ (n=3 à 5 ou POMM$_{3-5}$ (n=3 à 5 et R=R'=méthyle), de formule C$_2$H$_5$-(CH$_2$O)$_n$-C$_2$H$_5$ ou POME$_{2-8}$ (n=2 à 4 et R=R'=éthyle) et de formule CH$_3$-(CH$_2$O)$_n$-OC$_2$H$_5$ POMM/E$_{2-5}$ (n=2 à 5 et R=méthyle et R'=éthyle).

La répartition statistique des masses du mélange obtenu est déterminée par analyse CPG comme présentée dans le tableau 4. Le tableau 4 regroupe les compositions et répartitions moléculaires en fonction de n (déterminées par GPC) pour tous les produits POM préparés dans les exemples de synthèse 1 à 7 décrits ci-avant.

**Exemple synthèse 9** : Préparation du POMM$_{3-4}$ avec n =3 à 4 et R= R' = méthyle, par recyclage des têtes et des pieds de distillation des exemples de synthèse 2 et 3

Dans un réacteur Schott double-enveloppe de 1 L muni d'une agitation mécanique, d'un réfrigérant et d'une sonde de température, on charge 100 g de méthylal (aussi appelé diméthoxyméthane - CH$_3$-OCH$_2$-OCH$_3$) (1,32 mol) et 30 g de trioxanne (1 mol CH$_2$O). On ajoute les têtes de l'évaporation de l'exemple 2, c'est-à-dire le méthylal ainsi que le POMM$_2$ après avoir éliminé l'eau contenue par séchage sur sulfate de magnésium. On ajoute aussi le pied de la distillation de l'exemple 3.

On ajoute 10 g de résine Amberlyst A15 préalablement lavée au méthanol et séchée sous vide. On chauffe à 50°C et on laisse réagir 1 heure. Le mélange réactionnel est filtré, puis lavé avec 10 g d'une solution aqueuse de soude à 15% pds. Le méthylal est éliminé par évaporation sous pression réduite (90°C, 650 mBar (65 000 Pa) mesurés au niveau de l'évaporateur) à l'évaporateur rotatif, puis le POMM$_2$ et l'eau résiduelle sont ensuite éliminés par distillation sous vide (colonne de type Oldershaw à 10 plateaux) en opérant à une pression de 200 mBar (20 000 Pa) à 90°C. On obtient 60 g d'une coupe POMM$_{3-8}$ (CH$_3$-(CH$_2$O)$_n$-OCH$_3$ ou n vaut 3 à 8.

Sur le produit obtenu, on récolte la coupe de distillation entre 60°C sous 65 mBars (6500 Pa) et 90°C sous 10 mbar (1000 Pa) correspondant au POMM$_{3-4}$ où n vaut 3-4.

Caractéristiques POMM des exemples de synthèse 1 à 4 et 9

[Tableau 2]

| Exemples de synthèse | Composition POMM | n=2 % | n=3 % | n=4 % | n=5 % | n=3-5 (n=3-4) % | n<3 % | n>5 % |
|---|---|---|---|---|---|---|---|---|
| Exemple synthèse 1 | POMM$_{2-8}$ | 48 | 33 | 12 | 4 | 49 (45) | 48 | 3 |
| Exemple synthèse 2 | POMM$_{3-8}$ | | 47 | 29 | 14 | 90 (76) | 0 | 10 |
| Exemple synthèse 3 | POMM$_{3-4}$ | - | 62 | 37 | 1 | 100 (99) | 0 | 0 |
| Exemple synthèse 4 | POMM$_{3-5}$ | | 55 | 32 | 13 | 100 | 0 | 0 |

(suite)

| Exemples de synthèse | Composition POMM | n=2 % | n=3 % | n=4 % | n=5 % | n=3-5 (n=3-4) % | n<3 % | n>5 % |
|---|---|---|---|---|---|---|---|---|
| Exemple synthèse 9 | $POMM_{3-4}$ | - | 60 | 38 | 2 | 100 (98) | 0 | 0 |
| Les % rapportés sont des % d'aires des pics de chromatographie assimilables à des % pds | | | | | | | | |

Caractéristiques POME des exemples de synthèse 5 à 7

[Tableau 3]

| Exemples de synthèse | Composition POME | n=2 % | n=3 % | n=4 % | n=5 % | n=2-4 (n=2-3) % | n<2 % | n>5 % |
|---|---|---|---|---|---|---|---|---|
| Exemple synthèse 5 | $POME_{2-8}$ | 48 | 30 | 13 | 6 | 91 (78) | 0 | 3 |
| Exemple synthèse 6 | $POME_{2-4}$ | 56 | 30 | 13 | 1 | 100 (86) | 0 | 0 |
| Exemple synthèse 7 | $POME_{2-3}$ | 61 | 38 | 1 | | 100 (99) | 0 | 0 |
| Les % rapportés sont des % d'aires des pics de chromatographie assimilables à des % pds | | | | | | | | |

Caractéristiques mélange POMM/POME et POMM/E de l'exemple de synthèse 8 [Tableau 4]

| Exemples de synthèse | Composition POMM, POME et POMM/E | n=2 % | n=3 % | n=4 % | n=5 % | Distribution relative dans les familles respectives POMM, POME et POMM/E |
|---|---|---|---|---|---|---|
| Exemple synthèse 8 | $POMM_{3-5}$ | 0 | 22 | 11 | 5 | n= 3 à 5 : 100% rel<br>n=3 à 4 : 86,8% rel |
| | $POME_{2-4}$ | 4 | 2 | 1 | 0,3 | n=2 à 4 : 95,9% rel,<br>n>4 : 4,1%<br>n= 2 à 3 : 82,2% rel |
| | $POMM/E_{2-5}$ | 27 | 15 | 7 | 2,5 | n=2 à 5 : 100% rel<br>n=2 à 4 : 95,2% rel |
| Les % rapportés sont des % d'aires des pics de chromatographie assimilables à des % pds | | | | | | |

**Exemples applicatifs de compositions d'embaumement/conservation**

Les exemples applicatifs ont été réalisés en suivant le guide applicatif « Transitional Guidance on the Biocidal Products Regulation. Transitional Guidance on Efficacy Assessment for Product; Type 22 Embalming Products, of August 2014 », Edité par l'ECHA.

**Exemple applicatif 1** (comparatif hors invention)

On mélange 900 g de $POMM_{2-8}$ de l'exemple de synthèse 1 et 100 g de 1,2-propanediol (propylène glycol).
On injecte avec une pompe électrique, dans l'artère fémorale d'une dépouille mortelle d'une femme de 50 kg, 200 ml du mélange dilué dans 4,3 litres d'eau, puis on injecte 500 ml du mélange en cavité. Le volume total drainé pendant l'injection artérielle est de 3 litres. La diffusion du produit dans l'organisme est excellente. Pendant l'opération une légère odeur de solvants est notée par les opérateurs. La peau apparait hydratée et souple. Après 4 jours à température ambiante, la conservation du corps est bonne, et la souplesse et l'hydratation de la peau sont maintenues.

Après 10 jours à température ambiante la conservation du corps est bonne, mais on observe que la peau est sèche et rigide, en particulier au niveau du nez. Le produit n'est donc pas conforme aux attentes.

**Exemple applicatif 2** (comparatif hors invention)

On injecte avec une pompe électrique, dans l'artère fémorale d'une dépouille mortelle d'un homme de 80 kg, 300 ml de $POMM_{2-8}$ tel que produit selon l'exemple de synthèse 1 dilué dans 7,2 litres d'eau, puis on injecte 500 ml de $POMM_{2-8}$ en cavité. Le volume total drainé pendant l'injection artérielle est de 6 litres.

Après 5 jours à température ambiante, la conservation du corps est bonne. Après 15 jours à température ambiante, on observe une forte dégradation du corps accompagnée d'odeurs incommodantes. Le produit n'est donc pas conforme aux attentes.

**Exemple applicatif 3** (selon l'invention)

On prépare un mélange d'une formulation contenant du $POMM_{3-5}$ (4,8% pds) de l'exemple de synthèse 4, du propane-diol-1,2 (1,2% pds), du biocide Chlorure d'alkyl (C12-16) diméthyle benzyle Ammonium (ADBAC / BKC (C12-16) - CAS# 68424-85-1 (1,5 % pds) de la glycérine (3,7 % pds), un colorant rouge-éosine (2% pds) et de l'eau pour compléter.

On prépare une première solution de 1,5 litres de la formulation dans 6 litres d'eau.

On injecte avec une pompe électrique, dans l'artère fémorale d'une dépouille mortelle d'un homme de 83 kg, 5 litres de la solution aqueuse, puis à nouveau 2,5 litres de la solution. Puis on injecte 500 ml de la formulation (contenant le POMM à 4,8% pds) pure en cavité. Le volume total drainé pendant l'injection artérielle est de 6 litres.

Après 4 jours à température ambiante, la conservation du corps est bonne ; aucun gonflement n'est observé. Après 10 jours à température ambiante, la conservation du corps est bonne, aucune odeur n'est détectée. Après 15 jours à température ambiante, une dissection est effectuée par les médecins, les muscles étaient bien colorés, aucune odeur. Le médecin n'a pas constaté de différence avec un corps juste décédé. Prélèvement par les médecins du foie, qui est été trouvé comme étant de bonne qualité. Les autres organes étaient bien conservés. La souplesse du corps donne l'apparence d'un corps non « embaumé » et récent, apprécié pour les travaux pratiques de chirurgie.

Conditions des exemples applicatifs 1 à 3

[Tableau 5a]

| Exemple appli | Sexe | Poids estimé (Kg) | Corpulence | Niveau adiposité | Corps réfrigéré | Corps intègre | Injection / C=Carotide ; F=Fémorale ; A=Axillaire | Fluide artériel | Traitement Cavités | Drainage |
|---|---|---|---|---|---|---|---|---|---|---|
| 1 HI | F | 50 | nr | nr | nr | nr | F /électrique | 4,4% pds POMM dans 4,3 L | 0,5 L | 3 L |
| 2 HI | H | 80 | Moyenne | Moyenne | oui | oui | nr | 4% pds de POMM$_{2-8}$ dans 7,2 L | 0,5 L | 6 L |
| 3 | H | 83 | Moyenne | Moyenne | 24 hr | oui | C-D + F-D /électrique | 7,5 L @ 20% Vol | 0,5 L | 6 L |

nr= non rapporté ; HI = Hors invention ; H : Homme ; F : Femme ; F-D : fémorale droite ; F-G : fémorale gauche ; C-D : carotide droite, C-G : carotide gauche ; /électrique : pompe électrique, /manuelle : pompe manuelle

Résultats des exemples applicatifs 1 à 3

[Tableau 5b]

| Exemple appli | | Observation au soin | | Observation à 2 jours | Observation à 5 jours | Observation à 15 jours |
|---|---|---|---|---|---|---|
| | | Avant | Après | | | |
| 1 HI | Odeur | Bonne | Odeur de solvant | Bonne | Bonne | Mauvaise |
| | Coloration | Bonne | Bonne | Bonne | Bonne | Mauvaise |
| | Souplesse de la peau | Bonne | Bonne | Bonne | Bonne | Passable |
| 2 HI | Odeur | Passable | Bonne - Odeur de solvant | Bonne | Bonne | Mauvaise |
| | Coloration | Passable | Bonne | Passable | Passable | Mauvaise |
| | Souplesse de la peau | Bonne | Bonne | Bonne | Bonne | Passable |
| 3 | Odeur | Bonne | Bonne | Bonne | Bonne | Bonne |
| | Coloration | Bonne | Bonne | Bonne | Bonne | Bonne |
| | Souplesse de la peau | Bonne | Bonne | Bonne | Bonne | Bonne |

**Exemple applicatif 4** (comparatif, hors invention)

On prépare un mélange d'une formulation contenant du POMM$_{3-8}$ (9,0% pds) de l'exemple de synthèse 2, du

EP 3 714 691 A1

propane-diol-1,2 (1,2% pds), du biocide Chlorure d'Alkyl (C12-14) diméthyle benzyl ammonium CAS#85409-22-9 (1,5% pds), du Borax $Na_2B_4O_7$ (0,4% pds), un colorant rouge (2% pds) et de l'eau pour compléter. On constate que le produit du mélange eau-POMM$_{3-8}$ n'est pas limpide. Lorsque le mélange final est exposé au froid (+1°C) des flocons se forment et qui sédimentent dans le fond du flacon. Le produit n'est donc pas stable et donc non conforme aux attentes.

On prépare une première solution de 1,8 litres de la formulation dans 7,2 litres d'eau.

On injecte avec une pompe manuelle, dans la carotide droite et gauche d'une dépouille mortelle d'un homme de 60 kg, 9 litres de la solution aqueuse. Puis on injecte 500 ml de la formulation pure en cavité. Le volume total drainé pendant l'injection artérielle est de 5 litres.

Conditions de l'exemple applicatif 4

[Tableau 6a]

| Exemple appli | Sexe / Age (ans) | Poids estimé (Kg) | Corpulence | Niveau adiposité | Corps réfrigéré | Corps intègre | Injection / C=Carotide ; F=Fémorale ; A=Axillaire | Fluide artériel | Traitement Cavités | Drainage |
|---|---|---|---|---|---|---|---|---|---|---|
| 4 HI | H/40 | 60 | Moyenne | Faible | 24 hr | oui | C-D+G /manuelle | 9 L (à 20 % vol) | 0,5 L Pur. | 5 L |

La conservation au bout de 15 jours n'est pas bonne. On constate des odeurs importantes (voir tableau 6b).

Résultats de l'exemple applicatif 4

[Tableau 6b]

| Exemple appli | | Observation au soin | | Observation à 2 jours | Observation à 5 jours | Observation à 15 jours |
|---|---|---|---|---|---|---|
| | | avant | après | | | |
| 4 HI | Odeur | Bonne | Bonne | Bonne | Bonne | Mauvaise |
| | Coloration | Bonne | Bonne | Bonne | Bonne | Passable |
| | Souplesse de la peau | Bonne | Bonne | Bonne | Bonne | Bonne |

**Exemple applicatif 5** (selon l'invention)

On prépare un mélange d'une formulation contenant du POMM$_{3-4}$ (4,8% pds) de l'exemple de synthèse 3, du propane-diol-1,2 (1,2% pds), du Chlorure d'alkyl (C12-18) diméthyl benzyl ammonium (ADBAC (C12-18)) CAS# 68391-01-5 (1,5% pds), du nitrate de potassium (0,3% pds), un colorant rouge (2 % pds) et de l'eau pour compléter.

On prépare une première solution de 1,5 litres de la formulation dans 7,5 litres d'eau.

On injecte avec une pompe manuelle, dans la carotide droite d'une dépouille mortelle d'une femme de 75 kg, 6 litres de la solution aqueuse, puis à nouveau 3 litres de la solution. Puis on injecte 500 ml de la formulation pure en cavité. Le volume total drainé pendant l'injection artérielle n'a pas été rapporté.

Conditions de l'exemple applicatif 5

[Tableau 7a]

| Exemple appli | Sexe / Age (ans) | Poids estimé (Kg) | Corpulence | Niveau adiposité | Corps réfrigéré | Corps intègre | Injection / C=Carotide ; F=Fémorale ; A=Axillaire | Fluide artériel | Traitement Cavités | Drainage |
|---|---|---|---|---|---|---|---|---|---|---|
| 5 | F/90 | 75 | Moyenne | Moyenne | 24 hr | oui | C-D /manuelle | 9 L (à 17% vol) | 0,5 L | nr |

La conservation au bout de 15 jours est excellente (voir tableau 7b).

Résultats de l'exemple applicatif 5

[Tableau 7b]

| Exemple appli | | Observation au soin | | Observation à 2 jours | Observation à 5 jours | Observation à 15 jours |
|---|---|---|---|---|---|---|
| | | avant | après | | | |
| 5 | Odeur | Passable | Bonne | Bonne | Bonne | Bonne |
| | Coloration | Passable | Bonne | Passable | Passable | Passable |
| | Souplesse de la peau | Bonne | Bonne | Bonne | Bonne | Bonne |

**Exemple applicatif 6** (comparatif hors invention)

On prépare un mélange d'une formulation contenant du $POME_{2-8}$ (6% pds) de l'exemple de synthèse 5, du propane-diol-1,2 (1,2% pds), du Chlorure d'alkyl (C12-14) diméthyl éthyl benzyl ammonium (ADEBAC (C12-14)) CAS# 85409-23-0 (1,5% pds), du parfum (0,1% pds), de la glycérine (3% pds), un colorant rouge (2% pds) et de l'eau pour compléter. Lorsque le produit est exposé au froid (+1°C), un trouble se forme, et une matière en suspension décante vers le fond du flacon. Le produit n'est donc pas stable et est non conforme aux attentes.

On prépare une première solution de 1,6 litres de la formulation dans 6,4 litres d'eau.

On injecte avec une pompe électrique, dans la carotide droite et gauche d'une dépouille mortelle d'un homme de 120 kg, 6 litres de la solution aqueuse, puis à nouveau 2 litres de la solution. Puis on injecte 1000 ml de la formulation pure en cavité. Le volume total drainé pendant l'injection artérielle est de 6 litres.

Conditions de l'exemple applicatif 6

[Tableau 8a]

| Exemple appli | Sexe | Poids estimé (Kg) | Corpulence | Niveau adiposité | Corps réfrigéré | Corps intègre | Injection / C=Carotide ; F=Fémorale ; A=Axillaire | Fluide artériel | Traitement Cavités | Drainage |
|---|---|---|---|---|---|---|---|---|---|---|
| 6 HI | H | 120 | Forte | Moyenne | oui | oui | C-D+G /électrique | 8 L (@ 20% vol) | 1 L | 6 L |

La conservation au bout de 15 jours n'est pas acceptable. La coloration et la souplesse du corps sont fortement dégradées (voir tableau 8b).

Résultats de l'exemple applicatif 6

[Tableau 8b]

| Exemple appli | | Observation au soin | | Observation à 2 jours | Observation à 5 jours | Observation à 15 jours |
|---|---|---|---|---|---|---|
| | | avant | après | | | |
| 6 HI | Odeur | Bonne | Bonne | Bonne | Bonne | Passable |
| | Coloration | Passable | Bonne | Bonne | Passable | Mauvaise |
| | Souplesse de la peau | Bonne | Bonne | Bonne | Passable | Mauvaise |

**Exemple applicatif 7** (selon l'invention)

On prépare un mélange d'une formulation contenant du POME$_{2-4}$ (4,8% pds) de l'exemple de synthèse 6, du propane-diol-1,2 (1,2% pds), du Chlorure d'Alkyle (C12-C16) diméthyl benzyl ammonium (ADBAC/BKC (C12-16)) CAS# 68424-85-1 (1,5% pds), du Borax (0,5% pds), un colorant rouge (2% pds) et de l'eau pour compléter.
On prépare une première solution de 1,5 litres de la formulation dans 4,5 litres d'eau.
On injecte avec une pompe manuelle, dans la carotide droite et dans l'artère fémorale droite d'une dépouille mortelle d'une femme de 95 kg, 4 litres de la solution aqueuse, puis à nouveau 2 litres de la solution. Puis on injecte 500 ml de la formulation pure en cavité. Le volume total drainé pendant l'injection artérielle n'est pas rapporté.

Conditions de l'exemple applicatif 7

## [Tableau 9a]

| Exemple appli | Sexe / Age (ans) | Poids estimé (Kg) | Corpulence | Niveau adiposité | Corps réfrigéré | Corps intègre | Injection / C=Carotide ; F=Fémorale ; A=Axillaire | Fluide artériel | Traitement Cavités | Drainage |
|---|---|---|---|---|---|---|---|---|---|---|
| 7 | F/90 | 95 | Forte | Importante | 48 hr | oui | C-D+ F-D /manuelle | 6 L (@ 17% vol) | 0,5 L | nr |

La conservation au bout de 15 jours est bonne (voir tableau 9b).

Résultats de l'exemple applicatif 7

[Tableau 9b]

| Exemple appli | Caractéristique | Observation au soin | | Observation à 2 jours | Observation à 5 jours | Observation à 15 jours |
|---|---|---|---|---|---|---|
| | | avant | après | | | |
| 7 | Odeur | Bonne | Bonne | Bonne | Bonne | Bonne |
| | Coloration | Passable | Passable | Passable | Passable | Passable |
| | Souplesse de la peau | Bonne | Bonne | Bonne | Passable | Passable |

**Exemple applicatif 8** (selon l'invention)

On prépare un mélange d'une formulation contenant du $POME_{2-3}$ (4,8% pds) de l'exemple de synthèse 7, du propane-diol-1,2 (1,2% pds), du Chlorure d'Alkyle ($C_{12}$-$C_{16}$) diméthyl benzyl ammonium (ADBAC/BKC (C12-16)) CAS# 68424-85-1 (1,5% pds), du Borax (0,5% pds), un colorant rouge (2% pds) et de l'eau pour compléter.
On prépare une première solution de 1,5 litres de la formulation dans 7,5 litres d'eau.
On injecte avec une pompe manuelle, dans la carotide droite et dans l'artère fémorale droite d'une dépouille mortelle d'un homme de 95 kg, 6 litres de la solution aqueuse, puis à nouveau 3 litres de la solution. Puis, on injecte 500 ml de la formulation pure en cavité. Le volume total drainé pendant l'injection artérielle n'a pas été rapporté.

Conditions de l'exemple applicatif 8

[Tableau 10a]

| Exemple appli | Sexe | Poids estimé (Kg) | Corpulence | Niveau adiposité | Corps réfrigéré | Corps intègre | Injection / C=Carotide ; F=Fémorale ; A=Axillaire | Fluide artériel | Traitement Cavités | Drainage |
|---|---|---|---|---|---|---|---|---|---|---|
| 8 | H | 95 | Forte | Moyenne | oui | oui | C-D + F-D /manuelle | 9 L (@ 17% vol) | 0,5 L | nr |

La conservation du corps après 15 jours est bonne (voir tableau 10b).

Résultats de l'exemple applicatif 8

[Tableau 10b]

| Exemple appli | Caractéristique | Observation au soin | | Observation à 2 jours | Observation à 5 jours | Observation à 15 jours |
|---|---|---|---|---|---|---|
| | | avant | après | | | |
| 8 | Odeur | Bonne | Bonne | Bonne | Bonne | Bonne |
| | Coloration | Passable | Passable | Passable | Passable | Passable |
| | Souplesse de la peau | Bonne | Passable | Passable | Passable | Passable |

**Exemple applicatif 9** (selon l'invention)

On prépare un mélange d'une formulation contenant un mélange de $POMM_{3\text{-}5}$, $POME_{2\text{-}4}$ et $POMM/E_{2\text{-}5}$ (4,8% pds) de l'exemple de synthèse 8, du propane-diol-1,2 (1,2% pds), du Chlorure d'Alkyle ($C_{12}$-$C_{16}$) diméthyl benzyl ammonium (ADBAC/BKC ($C_{12}$-$_{16}$)) CAS# 68424-85-1 (1,5% pds), du Borax (0,5% pds), un colorant rouge (2% pds) et de l'eau pour compléter.

On prépare une première solution de 1,5 litres de la formulation dans 7,5 litres d'eau.

On injecte dans l'artère carotide droite et gauche d'une dépouille mortelle d'un homme, 6 litres de la solution aqueuse, puis à nouveau 3 litres de la solution. Puis on injecte 500 ml de la formulation pure en cavité. Le volume total drainé pendant l'injection artérielle est de 7 litres.

Conditions de l'exemple applicatif 9

[Tableau 11a]

| Exemple appli | Sexe | Poids estimé (Kg) | Corpulence | Niveau adiposité | Corps réfrigéré | Corps intègre | Injection / C=Carotide ; F=Fémorale ; A=Axillaire | Fluide artériel | Traitement Cavités | Drainage |
|---|---|---|---|---|---|---|---|---|---|---|
| 9 | H | 90 | Moyenne | Moyenne | oui | oui | C-D+G /nd | 9 L (@17% vol) | 0,5 L | 7 L |

Au bout de 15 jours, la conservation du corps est bonne (voir tableau 11 b).

Résultats de l'exemple applicatif 9

[Tableau 11b]

| Exemple appli | Caractéristique | Observation au soin | | Observation à 2 jours | Observation à 5 jours | Observation à 15 jours |
|---|---|---|---|---|---|---|
| | | Avant | après | | | |
| 9 | Odeur | Passable | Passable | Passable | Passable | Passable |
| | Coloration | Mauvaise | Bonne | Bonne | Passable | Passable |
| | Souplesse de la peau | Passable | Bonne | Bonne | Bonne | Bonne |

**Exemple applicatif 10** (selon l'invention)

On prépare un mélange d'une formulation contenant du $POMM_{3-4}$ (4,8% pds) de l'exemple de synthèse 9, du propane-diol-1,2 (1,2% pds), du Chlorure d'Alkyle ($C_{12}$-$C_{16}$) diméthyl benzyl ammonium (ADBAC/BKC ($C_{12}$-$C_{16}$)) CAS# 68424-85-1 (1,5% pds), du Borax (0,5% pds), un colorant rouge (2% pds) et de l'eau pour compléter.
On prépare une première solution de 1,5 litres de la formulation dans 7,5 litres d'eau.
On injecte avec une pompe manuelle, dans l'artère carotide droite et gauche d'une dépouille mortelle d'un homme de 80 kg, 6 litres de la solution aqueuse, puis à nouveau 3 litres de la solution. Puis on injecte 500 ml de la formulation pure en cavité. Le volume total drainé pendant l'injection artérielle est de 6 litres.

Conditions de l'exemple applicatif 10

[Tableau 12a]

| Exemple appli | Sexe / Age (ans) | Poids estimé (Kg) | Corpulence | Niveau adiposité | Corps réfrigéré | Corps intègre | Injection / C=Carotide ; F=Fémorale ; A=Axillaire | Fluide artériel | Traitement Cavités | Drainage |
|---|---|---|---|---|---|---|---|---|---|---|
| 10 | H/90 | 80 | Moyenne | Moyenne | 24 hr | oui | C-D+G /manuelle | 9 L (@ 17% vol) | 0,5 L | 6 L |

Au bout de 15 jours, la conservation du corps est bonne (voir tableau 12b).

Résultats de l'exemple applicatif 10

[Tableau 12b]

| Exemple appli | Caractéristique | Observation au soin | | Observation à 2 jours | Observation à 5 jours | Observation à 15 jours |
|---|---|---|---|---|---|---|
| | | avant | après | | | |
| 10 | Odeur | Passable | Bonne | Bonne | Bonne | Bonne |
| | Coloration | Passable | Bonne | Passable | Passable | Passable |
| | Souplesse de la peau | Bonne | Bonne | Bonne | Passable | Passable |

**Exemple applicatif 11** (selon l'invention)

On prépare un mélange d'une formulation contenant du POMM$_{3-5}$ (4,8% pds) de l'exemple de synthèse 4, du propane-diol-1,2 (1,2% pds), du Chlorure d'Alkyle (C12-C16) diméthyl benzyl ammonium (ADBAC/BKC (C12-16)) CAS# 68424-85-1 (1,5% pds), 3,7 % de Glycérine, 0,1 % de parfum, et un colorant rouge Eosine (2 % pds) et de l'eau pour compléter.
On prépare une première solution de 2 litres de la formulation dans 10 litres d'eau.
On injecte avec une pompe manuelle, dans la carotide droite et gauche d'une dépouille mortelle d'une femme de 80 kg, 6 litres de la solution aqueuse, puis à nouveau 4 litres de la solution. Puis on injecte 500 ml de la formulation pure en cavité. Le volume total drainé pendant l'injection artérielle est de 9 L.

Conditions de l'exemple applicatif 11

[Tableau 13a]

| Exemple appli | Sexe | Poids estimé (Kg) | Corpulence | Niveau adiposité | Corps réfrigéré | Corps intègre | Injection / C=Carotide ; F=Fémorale ; A=Axillaire | Fluide artériel | Traitement Cavités | Drainage |
|---|---|---|---|---|---|---|---|---|---|---|
| 11 | F | 80 | Forte | Importante | 72hr | oui | C-D +G /manuelle | 12 L (à 17% vol) | 0,5 L | 9 L |

La conservation au bout de 15 jours est excellente (voir tableau 13b).

Résultats de l'exemple applicatif 11

[Tableau 13b]

| Exemple appli | | Observation au soin | | Observation à 2 jours | Observation à 5 jours | Observation à 15 jours |
|---|---|---|---|---|---|---|
| | | avant | après | | | |
| 11 | Odeur | Passable | Bonne | Bonne | Bonne | Bonne |
| | Coloration | Passable | Bonne | Passable | Passable | Passable |
| | Souplesse de la peau | Bonne | Bonne | Bonne | Passable | Passable |

**Exemple applicatif 12** (comparatif hors invention)

On prépare un mélange d'une formulation contenant du POME$_{2-8}$ (6% pds) de l'exemple de synthèse 5, du propane-diol-1,2 (1,2% pds), du Chlorure d'Alkyle (C12-C16) diméthyl benzyl ammonium (ADBAC/BKC (C12-16)) CAS# 68424-85-1 (1,5% pds), 3,7 % pds de glycérine, du parfum (0,1% pds), un colorant rouge Eosine (2% pds) et de l'eau pour compléter. Lorsque le produit est exposé au froid (+2°C), un trouble se forme, et une matière en suspension décante vers le fond du flacon. Le produit n'est donc pas stable et est non conforme aux attentes.

On prépare une première solution de 2 litres de la formulation dans 8 litres d'eau.

On injecte avec une pompe électrique, dans la carotide droite d'une dépouille mortelle d'un homme de 70 kg, 6 litres de la solution aqueuse, puis à nouveau 4 litres de la solution. Puis on injecte 500 ml de la formulation pure en cavité. Le volume total drainé pendant l'injection artérielle est de 9 litres.

Conditions de l'exemple applicatif 12

[Tableau 14a]

| Exemple appli | Sexe | Poids estimé (Kg) | Corpulence | Niveau adiposité | Corps réfrigéré | Corps intègre | Injection / C=Carotide ; F=Fémorale ; A=Axillaire | Fluide artériel | Traitement Cavités | Drainage |
|---|---|---|---|---|---|---|---|---|---|---|
| 12 HI | H | 70 | Moyenne | Faible | oui | oui | C-D /électrique | 10 L (@ 20% vol) | 0.5 L | 9 L |

La conservation au bout de 15 jours n'est pas acceptable. La coloration et la souplesse du corps sont fortement dégradées (voir tableau 14b).

Résultats de l'exemple applicatif 12

[Tableau 14b]

| Exemple appli | | Observation au soin | | Observation à 2 jours | Observation à 5 jours | Observation à 15 jours |
|---|---|---|---|---|---|---|
| | | avant | après | | | |
| 12 HI | Odeur | Bonne | Bonne | Bonne | Bonne | Passable |
| | Coloration | Passable | Passable | Passable | Passable | Mauvaise |
| | Souplesse de la peau | Mauvaise | Passable | Passable | Passable | Mauvaise |

**Exemple applicatif 13** (selon l'invention)

On prépare un mélange d'une formulation contenant du POMM$_{2-4}$ (4,8% pds) de l'exemple de synthèse 6, du propane-diol-1,2 (1,2% pds), du Chlorure d'alkyl (C12-14) diméthyl éthyl benzyl ammonium (ADEBAC (C12-14)) CAS# 85409-23-0 (1,5% pds), de la glycérine 3 % pds, du Borax 0,4 % pds, du parfum 0,1 % pds, du nitrate de potassium (0,3% pds), un colorant rouge Eosine (2 % pds), et le complément en eau.
On prépare une première solution de 1,5 litres de la formulation dans 7,5 litres d'eau.
On injecte avec une pompe électrique, dans la carotide droite et gauche d'une dépouille mortelle d'un homme de 100 kg, 7 litres de la solution aqueuse, puis à nouveau 3 litres de la solution. Puis on injecte 500 ml de la formulation pure en cavité. Le volume total drainé pendant l'injection artérielle est de 6 L.

Conditions de l'exemple applicatif 13

[Tableau 15a]

| Exemple appli | Sexe | Poids estimé (Kg) | Corpulence | Niveau adiposité | Corps réfrigéré | Corps intègre | Injection / C=Carotide ; F=Fémorale ; A=Axillaire | Fluide artériel | Traitement Cavités | Drainage |
|---|---|---|---|---|---|---|---|---|---|---|
| 13 | H | 100 | Moyenne | Moyenne | 48 hr | oui | C-D + G /électrique | 10 L (à 20% vol) | 0,5 L | 6 L |

La conservation au bout de 15 jours est excellente (voir tableau 15b).

Résultats de l'exemple applicatif 13

[Tableau 15b]

| Exemple appli | | Observation au soin | | Observation à 2 jours | Observation à 5 jours | Observation à 15 jours |
|---|---|---|---|---|---|---|
| | | avant | après | | | |
| 13 | Odeur | Passable | Bonne | Bonne | Bonne | Bonne |
| | Coloration | Passable | Passable | Passable | Passable | Passable |
| | Souplesse de la peau | Bonne | Bonne | Bonne | Passable | Passable |

**Exemple applicatif 14** (comparatif hors invention)

On prépare un mélange d'une formulation contenant du POME$_{3-8}$ (9% pds) de l'exemple de synthèse 2, du propane-diol-1,2 (1,2% pds), du Chlorure d'alkyl (C12-14) diméthyl éthyl benzyl ammonium (ADEBAC (C12-14)) CAS# 85409-23-0 (1,5% pds), de la glycérine 3 % pds, du Borax 0,4 % pds, du parfum 0,1 % pds, du nitrate de potassium (0,3% pds), un colorant rouge Eosine (2 % pds), et le complément en eau. Lorsque le produit est exposé au froid (+1°C), un trouble se forme, et une matière en suspension décante vers le fond du flacon. Le produit n'est donc pas stable et est non conforme aux attentes.

On prépare une première solution de 1,5 litres de la formulation dans 7,5 litres d'eau.

On injecte avec une pompe manuelle, dans la fémorale droite d'une dépouille mortelle d'une femme de 60 kg, 6 litres de la solution aqueuse, puis à nouveau 3 litres de la solution. Puis on injecte 500 ml de la formulation pure en cavité. Le volume total drainé pendant l'injection artérielle est de 7 litres.

Conditions de l'exemple applicatif 14

[Tableau 16a]

| Exemple appli | Sexe | Poids estimé (Kg) | Corpulence | Niveau adiposité | Corps réfrigéré | Corps intègre | Injection / C=Carotide ; F=Fémorale ; A=Axillaire | Fluide artériel | Traitement Cavités | Drainage |
|---|---|---|---|---|---|---|---|---|---|---|
| 14 HI | F | 60 | Moyenne | Moyenne | non | oui | F-D /manuelle | 9 L (@ 17% vol) | 0.5 L | 7 L |

La conservation au bout de 15 jours n'est pas acceptable. La coloration et la souplesse du corps sont fortement dégradées (voir tableau 16b).

Résultats de l'exemple applicatif 14

[Tableau 16b]

| Exemple appli | | Observation au soin | | Observation à 2 jours | Observation à 5 jours | Observation à 15 jours |
|---|---|---|---|---|---|---|
| | | avant | après | | | |
| 14 HI | Odeur | Passable | Passable | Passable | Passable | Passable |
| | Coloration | Passable | Passable | Passable | Passable | Mauvaise |
| | Souplesse de la peau | Passable | Passable | Passable | Passable | Mauvaise |

**Exemple applicatif 15** (comparatif hors invention)

On prépare un mélange d'une formulation contenant du POME$_{2-8}$ (4.8% pds) de l'exemple de synthèse 1, du propane-diol-1,2 (1,2% pds), du Chlorure d'Alkyle (C12-C16) diméthyl benzyl ammonium (ADBAC/BKC (C12-16)) CAS# 68424-85-1 (1,5% pds), de la glycérine 3 % pds, un colorant rouge Eosine (2 % pds), et le complément en eau. Lorsque le produit est exposé au froid (+1°C), un trouble se forme, et une matière en suspension décante vers le fond du flacon. Le produit n'est donc pas stable et est non conforme aux attentes.

On prépare une première solution de 3 litres de la formulation dans 12 litres d'eau.

On injecte avec une pompe manuelle, dans la carotide droite et gauche d'une dépouille mortelle d'un homme de 80 kg, 6 litres de la solution aqueuse, puis à nouveau 6 litres de la solution. Puis on injecte 500 ml de la formulation (contenant le POMM à 4,8% pds) pure en cavité. Le volume total drainé pendant l'injection artérielle est de 9 litres.

Conditions de l'exemple applicatif 15

[Tableau 17a]

| Exemple appli | Sexe / Age (ans) | Poids estimé (Kg) | Corpulence | Niveau adiposité | Corps réfrigéré | Corps intègre | Injection / C=Carotide ; F=Fémorale ; A=Axillaire | Fluide artériel | Traitement Cavités | Drainage |
|---|---|---|---|---|---|---|---|---|---|---|
| 15 HI | H | 80 | Moyenne | Moyenne | 24 hr | oui | C-D+G /manuelle | 12 L (@ 17 % Vol) | 0,5 L | 9 L |

Après 5 jours à température ambiante, la conservation du corps est passable ; aucun gonflement n'est observé. Après 10 jours à température ambiante, la conservation du corps est toujours passable. Après 15 jours à température ambiante, la conservation n'est pas acceptable. La coloration et la souplesse du corps sont fortement dégradées (voir tableau 17b).

Résultats de l'exemple applicatif 15

[Tableau 17b]

| Exemple appli | | Observation au soin | | Observation à 2 jours | Observation à 5 jours | Observation à 15 jours |
|---|---|---|---|---|---|---|
| | | avant | après | | | |
| 15 HI | Odeur | Passable | Passable | Passable | Passable | Passable |
| | Coloration | Passable | Bonne | Passable | Passable | Mauvaise |
| | Souplesse de la peau | Bonne | Bonne | Bonne | Passable | Mauvaise |

**Exemple applicatif 16** (comparatif hors invention)

On prépare un mélange d'une formulation contenant du POMM$_{2-8}$ (4,8% pds) de l'exemple de synthèse 1, du propane-diol-1,2 (1,2% pds), du Chlorure d'alkyl (C12-18) diméthyl benzyl ammonium (ADBAC (C12-18)) CAS# 68391-01-5 (1,5% pds), du nitrate de potassium (0,3% pds), un colorant rouge (2% pds) et de l'eau pour compléter. Lorsque le produit est exposé au froid (+1°C), un trouble se forme, et une matière en suspension décante vers le fond du flacon. Le produit n'est donc pas stable et est non conforme aux attentes.

On prépare une première solution de 1,5 litres de la formulation dans 7,5 litres d'eau.

On injecte dans la carotide droite et gauche d'une dépouille mortelle d'un homme de 85 ans et de 75 kg, 6 litres de la solution aqueuse, puis à nouveau 3 litres de la solution. Puis on injecte 500 ml de la formulation pure en cavité. Le volume total drainé pendant l'injection artérielle est de 5 litres.

Conditions de l'exemple applicatif 16

[Tableau 18a]

| Exemple appli | Sexe / Age (ans) | Poids estimé (Kg) | Corpulence | Niveau adiposité | Corps réfrigéré | Corps intègre | Injection / C=Carotide ; F=Fémorale ; A=Axillaire | Fluide artériel | Traitement Cavités | Drainage |
|---|---|---|---|---|---|---|---|---|---|---|
| 16 HI | H/85 | 75 | Maigre | Faible | 24 hr | oui | C-D+G | 9 L (@17 % vol) | 0,5 L | 5 L |

La conservation au bout de 15 jours n'est pas acceptable. La coloration et la souplesse du corps sont fortement dégradées (voir tableau 18b).

Résultats de l'exemple applicatif 16

[Tableau 18b]

| Exemple appli | | Observation au soin | | Observation à 2 jours | Observation à 5 jours | Observation à 15 jours |
|---|---|---|---|---|---|---|
| | | avant | après | | | |
| 16 HI | Odeur | Bonne | Bonne | Bonne | Bonne | Passable |
| | Coloration | Passable | Passable | Passable | Passable | Mauvaise |
| | Souplesse de la peau | Passable | Passable | Passable | Passable | Mauvaise |

**Exemple applicatif 17** (comparatif hors invention)

On prépare un mélange d'une formulation contenant du $POMM_{2-8}$ (4,8% pds) de l'exemple de synthèse 1, du propane-diol-1,2 (1,2% pds), du Chlorure d'Alkyle (C12-C16) diméthyl benzyl ammonium (ADBAC/BKC (C12-16)) CAS# 68424-85-1 (1,5% pds), du Borax (0,5% pds), un colorant rouge (2% pds) et de l'eau pour compléter. Lorsque le produit est exposé au froid (+1°C), un trouble se forme, et une matière en suspension décante vers le fond du flacon. Le produit n'est donc pas stable et est non conforme aux attentes.
On prépare une première solution de 1,5 litres de la formulation dans 7,5 litres d'eau.
On injecte avec une pompe manuelle, dans l'artère carotide droite et fémorale droite d'une dépouille mortelle d'un homme de 60 kg, 6 litres de la solution aqueuse, puis à nouveau 3 litres de la solution. Puis on injecte 500 ml de la formulation pure en cavité. Le volume total drainé pendant l'injection artérielle n'a pas été rapporté.

Conditions de l'exemple applicatif 17

[Tableau 19a]

| Exemple appli | Sexe | Poids estimé (Kg) | Corpulence | Niveau adiposité | Corps réfrigéré | Corps intègre | Injection / C=Carotide ; F=Fémorale ; A=Axillaire | Fluide artériel | Traitement Cavités | Drainage |
|---|---|---|---|---|---|---|---|---|---|---|
| 17 HI | H | 60 | Maigre | faible | 48 hr | oui | C-D + F-D /manuelle | 9 L (@ 17 % Vol) | 0,5 L | nr |

La conservation au bout de 15 jours n'est pas acceptable. La coloration et la souplesse du corps sont fortement dégradées (voir tableau 19b).

Résultats de l'exemple applicatif 17

[Tableau 19b]

| Exemple appli | | Observation au soin | | Observation à 2 jours | Observation à 5 jours | Observation à 15 jours |
|---|---|---|---|---|---|---|
| | | avant | après | | | |
| 17 HI | Odeur | Bonne | Passable | Passable | Passable | Passable |
| | Coloration | Passable | Passable | Passable | Passable | Mauvaise |
| | Souplesse de la peau | Passable | Passable | Passable | Passable | Mauvaise |

**Exemple applicatif 18** (comparatif hors invention)

On prépare un mélange d'une formulation contenant du POMM$_{2-8}$ (4,8% pds) de l'exemple de synthèse 1, du propane-diol-1,2 (1,2% pds), du Chlorure d'Alkyle (C12-C16) diméthyl benzyl ammonium (ADBAC/BKC (C12-16)) CAS# 68424-85-1 (1,5% pds), 3,7 % de Glycérine, 0,1 % de parfum, et un colorant rouge Eosine (2 % pds) et de l'eau pour compléter. Lorsque le produit est exposé au froid (+1°C), un trouble se forme, et une matière en suspension décante vers le fond du flacon. Le produit n'est donc pas stable et est non conforme aux attentes.

On prépare une première solution de 1 litres de la formulation dans 5 litres d'eau.

On injecte avec une pompe manuelle, dans la carotide droite et gauche d'une dépouille mortelle d'une femme de 50 kg, 4 litres de la solution aqueuse, puis à nouveau 2 litres de la solution. Puis on injecte 500 ml de la formulation pure en cavité. Le volume total drainé pendant l'injection artérielle est de 4 L.

Conditions de l'exemple applicatif 18

[Tableau 20a]

| Exemple appli | Sexe | Poids estimé (Kg) | Corpulence | Niveau adiposité | Corps réfrigéré | Corps intègre | Injection / C=Carotide ; F=Fémorale ; A=Axillaire | Fluide artériel | Traitement Cavités | Drainage |
|---|---|---|---|---|---|---|---|---|---|---|
| 18 HI | F | 50 | Maigre | Faible | 48 Hr | oui | C-D+G / manuelle | 6 L (@ 17 % vol) | 0,5 L | 4 L |

La conservation au bout de 15 jours n'est pas acceptable. La coloration et la souplesse du corps sont fortement dégradées (voir tableau 20b).

Résultats de l'exemple applicatif 18

[Tableau 20b]

| Exemple appli | | Observation au soin | | Observation à 2 jours | Observation à 5 jours | Observation à 15 jours |
|---|---|---|---|---|---|---|
| | | avant | après | | | |
| 18 HI | Odeur | Passable | Passable | Passable | Passable | Passable |
| | Coloration | Passable | Passable | Passable | Passable | Mauvaise |
| | Souplesse de la peau | Passable | Passable | Passable | Passable | Mauvaise |

## Revendications

1. Composition aqueuse **caractérisée en ce qu'**elle comprend les composants suivants :

   a) un mélange de polyoxyméthylène dialkyléthers (POM) choisi parmi un mélange de composés de formule générale R-(OCH$_2$)$_n$-OR',
   avec R,R' étant identiques ou différents et choisis parmi méthyle et/ou éthyle pour au moins 90%, de préférence au moins 95% molaire du total R+R' et le reste R, R' étant des alkyles identiques ou différents choisis parmi ceux ayant de 3 à 8 carbones et représentant moins de 10%, de préférence moins de 5% molaire du total R+R', et sous condition que :

   a1) quand R=R'= méthyle, ledit mélange comprend les 3 composés avec n = 3 à 5 ou les 2 composés avec n = 3 à 4, et le poids desdits composés (avec n = 3 à 5 ou n = 3 à 4) représente au moins 95%, de préférence au moins 99% du poids total dudit mélange et
   a2) quand R=R'= éthyle, ledit mélange comprend les 3 composés avec n = 2 à 4 ou les 2 composés avec n = 2 à 3
   et le poids desdits composés (avec n = 2 à 4 ou n = 2 à 3) représente au moins 95%, de préférence au moins 99% du poids total dudit mélange
   a3) quand R= méthyle et R'= éthyle, ledit mélange comprend les 4 composés avec n = 2 à 5 ou les 3 composés avec n = 2 à 4 et le poids desdits composés (avec n = 2 à 5 ou n = 2 à 4) représente au moins 95%, de préférence au moins 99% du poids total dudit mélange,

   b) au moins un agent biocide
   c) au moins un agent pro-pénétrant

d) au moins un colorant,
e) en option, au moins un autre additif

et de l'eau comme diluant.

**2.** Composition selon la revendication 1, **caractérisée en ce que** le taux en poids des composants a)+b)+c)+d)+e) représente de 0,5 à 30%, de préférence de 1 à 25% et plus préférentiellement de 1 à 20% du poids total de ladite composition aqueuse.

**3.** Composition selon la revendication 1, **caractérisée en ce que** ledit composant a) représente de 20 à 50%, de préférence de 30 à 40% en poids par rapport à a)+b)+c)+d)+e) et de 0,5 à 15%, de préférence de 0,8 à 8% du poids total de ladite composition aqueuse.

**4.** Composition selon l'une des revendications 1 à 3, **caractérisée en ce que** ledit composant a) est un mélange selon a1) avec R=R'= méthyle avec n = 3 à 5 ou n = 3 à 4.

**5.** Composition selon l'une des revendications 1 à 3, **caractérisée en ce que** ledit composant a) est le mélange selon a2) avec R=R= éthyle et avec n = 2 à 4 ou avec n = 2 à 3.

**6.** Composition selon l'une des revendications 1 à 3, **caractérisée en ce que** ledit mélange est selon a3), avec R=méthyle et R'=éthyle et avec n = 2 à 5 ou n = 2 à 4.

**7.** Composition selon l'une des revendications 1 à 6, **caractérisée en ce que** ledit composant biocide b) est choisi parmi : Iode, Polyvinylpyrolidone iodée (complexe polyvinylpyrolidone-iode), Bronopol ou 2-Bromo-2-nitro-1,3-propanediol, Chlorure d'alkyl (C12-C18) diméthylbenzylammonium (ADBAC C12-18),Chlorure d'alkyl (C12-C16) diméthylbenzylammonium (ADBAC/BKC C12-16), Chlorure d'alkyl (C12-C14) diméthylbenzylammonium (ADBAC C12-14); Chlorure d'alkyl (C12-C14) Diméthyl éthyl benzyl ammonium (ADEBAC C12-14), Glutaraldéhyde; Ethanol, Acide peracétique, peroxyde de méthyl éthyl cétone, Butanedial, Diéthylacétal, Glyoxal , Diéthylène glycol, Acides organiques tels que acide ascorbique ou acide citrique, Phénoliques tels que l'aldéhyde vanilique, le gaïacol, l'eugénol, Phénol, methylparabène, propylparabène, Chlorure de 1-hexadécylpyridinium, un composé de formule $(C_3H_4O)n.(C_3H_4O_2)m$ où n>m, et leurs mélanges.

**8.** Composition selon l'une des revendications 1 à 7, **caractérisée en ce que** ledit composant biocide b) est choisi parmi : Iode, Polyvinylpyrolidone iodée (complexe polyvinylpyrolidone-iode), Bronopol, Chlorure d'alkyl (C12-C18) diméthylbenzylammonium (ADBAC C12-18), Chlorure d'alkyl C12-C16) diméthyl benzyl ammonium (ADBAC/BKC C12-16), Chlorure d'alkyl (C12-C14) diméthyl benzyl ammonium (ADBAC C12-14), Chlorure d'alkyl (C12-C14) Diméthyl éthyl benzyl ammonium (ADEBAC C12-14), Glutaraldéhyde, un composé de formule $(C_3H_4O)n.(C_3H_4O_2)m$ où n>m, et leurs mélanges.

**9.** Composition selon l'une des revendications 1 à 8, **caractérisée en ce que** ledit composant pro-pénétrant c) est choisi parmi : Propylène glycol, Monoéthylène glycol, Glycérol, Propanol-2, diméthyl sulfoxyde, polyéthylèneglycol, 2-éthoxyéthanol, 2-phénoxyéthanol, alcool tétrahydrofurfurylique, un mono-alcool linéaire ou ramifié en $C_2$-$C_6$ ; un glycol tel que propanediol-1,3, Butanediol-1,4, Butanediol-1,3, Butanediol-2,3, hexylèneglycol ; un acide gras en $C_8$-$C_{22}$; une cyclodextrine ; un tensioactif ; un acétate d'alkyle en $C_1$-$C_4$ ; un mono- ou polyester d'acide gras et de glycérol ou de propylène glycol ; un ester d'alcool gras d'acide lactique ou d'acide glycolique ; un ester d'acide gras et d'isopropyle ; un alcool gras en $C_8$-$C_{18}$; un azone ; un N,N-dialkylamino-alcanoate d'alkyle ; un amide ; l'urée ; un dérivé d'urée ; un terpène ; un terpénoïde ; le nicotinate de méthyle ou de benzyle ; un sulfoxyde ; l'isosorbide ; et leurs mélanges.

**10.** Composition selon l'une des revendications 1 à 9, **caractérisée en ce que** ledit composant pro-pénétrant c) est choisi parmi Propylène glycol, Monoéthylène glycol, Glycérol, Propanol-2, diméthylsulfoxyde, et leurs mélanges.

**11.** Composition selon l'une des revendications 1 à 10, **caractérisée en ce qu'**elle comprend :

- 0,5 à 10%, de préférence de 0,8 à 8% en poids de composant a) par rapport au poids total de la composition aqueuse
- de 0,1 à 3%, de préférence de 0,15 à 2% en poids de composant b) par rapport au poids total de la composition aqueuse

- de 0,5 à 10%, de préférence de 0,8 à 8% en poids de composant c) par rapport au poids total de la composition aqueuse
- de 0,1 à 8%, de préférence de 0,2 à 5% en poids de composant d) par rapport au poids total de la composition aqueuse.

12. Composition selon l'une des revendications 1 à 11, **caractérisée en ce qu'**elle comprend en plus au moins un autre additif sélectionné parmi : parfum, en particulier un parfum naturel ou synthétique, par exemple des extraits de fleur comme la rose (huile de rose) ou le lilas et des esters aromatiques, de préférence avec des notes fraiches comme l'eucalyptus ; du borax ; nitrate de potassium ; acide borique ; citrate de sodium ; sodium hexamétaphosphate, acétate de sodium, acide chlorhydrique, Oxyde de bis(tributylétain), phosphate de sodium dibasique ; phosphate de sodium monobasique ; acide éthylènediamine tétracétique (EDTA) ; alkylsulfonate de sodium ; carbonate de potassium ; trichloroacétaldéhyde ; et leurs mélanges.

13. Procédé non thérapeutique pour conserver un corps humain ou animal et/ou embaumer un corps mort, ledit procédé comprenant l'administration audit corps d'une composition selon l'une quelconque des revendications 1 à 12.

14. Procédé selon la revendication 13, **caractérisé en ce que** ladite composition est injectée par voie intra-artérielle dans ledit corps.

15. Procédé selon la revendication 13, **caractérisé en ce que** ladite composition est perfusée dans ledit corps.

16. Procédé selon la revendication 13, **caractérisé en ce que** ladite composition est appliquée par voie topique sur ledit corps.

17. Utilisation de la composition telle que définie selon l'une des revendications 1 à 12 pour la conservation du corps humain ou animal mort et/ou pour l'embaumement dudit corps mort ou pour les besoins d'anatomopathologie.

18. Utilisation selon la revendication 17, **caractérisée en ce qu'**il s'agit d'une utilisation pour des besoins d'anatomopathologie.

19. Utilisation selon la revendication 18, **caractérisée en ce qu'**il s'agit de la conservation d'organes, de tissus ou de cellules du corps humain ou animal vivant ou mort par immersion desdits organes, tissus ou cellules dans la composition telle que définie selon l'une des revendications 1 à 12.

20. Utilisation selon la revendication 17, **caractérisée en ce que** ladite composition est utilisée pour ladite conservation ou/et pour ledit embaumement dudit corps selon une des méthodes suivantes :

   - injection de ladite composition par voie intra-artérielle dans ledit corps
   - perfusion de ladite composition dans ledit corps
   - application de ladite composition sur ledit corps par voie topique.

21. Mélange de composés de formule générale $R-(OCH_2)_n-OR'$ avec R, R' étant identiques ou différents et choisis parmi méthyle et/ou éthyle pour au moins 90%, de préférence au moins 95% molaire du total R+R' et le reste R, R' étant des alkyles identiques ou différents choisis parmi ceux ayant de 3 à 8 carbones et représentant moins de 10%, de préférence moins de 5% molaire du total R+R', et sous condition que :

   a1) quand R=R'= méthyle, ledit mélange comprend les 3 composés avec n = 3 à 5 ou les 2 composés avec n = 3 à 4 et le poids desdits composés (avec n = 3 à 5 ou n = 3 à 4) représente au moins 95%, de préférence au moins 99%, du poids total dudit mélange
   a2) quand R=R'= éthyle, ledit mélange comprend les 3 composés avec n = 2 à 4 ou les 2 composés avec n = 2 à 3 et le poids desdits composés (avec n = 2 à 4 ou n = 2 à 3) représente au moins 95%, de préférence au moins 99%, du poids total dudit mélange
   a3) quand R= méthyle et R'= éthyle, ledit mélange comprend les 4 composés avec n = 2 à 5 ou les 3 composés avec n = 2 à 4 et le poids desdits composés (avec n = 2 à 5 ou n = 2 à 4) représente au moins 95%, de préférence au moins 99%, du poids total dudit mélange.

22. Procédé de préparation d'un mélange de composés tel que défini à la revendication 21, le procédé comprenant les étapes suivantes :

a) réaction d'un mélange de POM et d'une source de formaldéhyde en présence d'un catalyseur acide, dans laquelle le mélange de POM est représenté par la formule générale $R_1\text{-}(OCH_2)_n\text{-}OR_1'$

avec

$R_1$ et $R_1'$, identiques ou différents, sont choisis parmi un alkyle ayant de 1 à 8 atomes de carbone, et

$n = 1$ à l'infini ;

b) éventuellement séparation du catalyseur acide du milieu réactionnel ;

c) éventuellement neutralisation du milieu réactionnel ;

d) évaporation des POM légers de formule générale $R\text{-}(OCH_2)_n\text{-}OR'$ avec $n = 1$ et/ou 2 lorsque R et R' = méthyle ou avec $n = 1$ lorsque R = éthyle et R' = méthyle ou éthyle ;

e) distillation pour éliminer les POM lourds de formule générale $R\text{-}(OCH_2)_n\text{-}OR'$ avec $n > 5$ lorsque R = méthyle et R' = méthyle ou éthyle ou avec $n > 4$ lorsque R et R' = éthyle ;

f) éventuellement recyclage des POM légers et/ou des POM lourds dans l'étape a).

Europäisches
Patentamt

European
Patent Office

Office européen
des brevets

## RAPPORT DE RECHERCHE EUROPEENNE

Numéro de la demande

EP 20 16 5959

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | WO 2010/116075 A2 (ARKEMA FRANCE [FR]; SIGOURE JEAN [FR] ET AL.) 14 octobre 2010 (2010-10-14) | 1-21 | INV. A01N1/00 A01N1/02 A01N33/12 |
| Y | * revendications 1-10 * ----- | 22 | A01N25/02 |
| X,D | EP 1 938 684 A1 (ARKEMA FRANCE [FR]) 2 juillet 2008 (2008-07-02) | 1-21 | A01P1/00 C07C41/56 |
| Y | * revendications 1-12 * ----- | 22 | C07C43/30 |
| X,D | WO 2010/001048 A2 (ARKEMA FRANCE [FR]; DUBOIS JEAN-LUC [FR]) 7 janvier 2010 (2010-01-07) | 1-21 | |
| Y | * revendications 1-9 * ----- | 22 | |
| X | GB 603 872 A (ICI LTD) 24 juin 1948 (1948-06-24) | 21,22 | |
| Y | * exemples 2-4 * * revendications 1-19 * ----- | 21,22 | |
| X | CN 206 337 195 U (ZIBO JINCHANG COMBUSTION MATERIALS TECH CO LTD) 18 juillet 2017 (2017-07-18) | 21,22 | DOMAINES TECHNIQUES RECHERCHES (IPC) |
| Y | * abrégé * * revendications 1-3 * ----- | 21,22 | A01N C07C |
| X | US 2015/291722 A1 (WANG JINFU [CN] ET AL) 15 octobre 2015 (2015-10-15) | 21,22 | |
| Y | * exemples 1-2 * ----- | 21,22 | |
| X | CN 106 518 641 A (CARY ENV TECH CO LTD) 22 mars 2017 (2017-03-22) | 21,22 | |
| Y | * revendications 1-10 * ----- | 21,22 | |
| X | CN 109 053 394 A (UNIV CHANGZHOU) 21 décembre 2018 (2018-12-21) | 21,22 | |
| Y | * abrégé * * revendications 1-11 * ----- | 21,22 | |

-/--

Le présent rapport a été établi pour toutes les revendications

| Lieu de la recherche | Date d'achèvement de la recherche | Examinateur |
|---|---|---|
| Munich | 10 juin 2020 | Marie, Gérald |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
........................................................................
& : membre de la même famille, document correspondant

EPO FORM 1503 03.82 (P04C02)

page 1 de 2

Europäisches
Patentamt

European
Patent Office

Office européen
des brevets

# RAPPORT DE RECHERCHE EUROPEENNE

Numéro de la demande

EP 20 16 5959

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | CN 106 588 590 A (CHINA PETROLEUM & CHEM CORP ET AL.) 26 avril 2017 (2017-04-26) | 21,22 | |
| Y | * revendications 1-10 * <br> * abrégé * | 21,22 | |
| | ----- | | |
| X | CN 109 096 062 A (CHINA PETROLEUM & CHEM CORP ET AL.) 28 décembre 2018 (2018-12-28) | 21,22 | |
| Y | * exemples 1-3 * <br> * abrégé * | 21,22 | |
| | ----- | | |
| X | CN 109 096 065 A (CHINA PETROLEUM & CHEM CORP ET AL.) 28 décembre 2018 (2018-12-28) | 21 | |
| Y | * abrégé * <br> * revendications 1-10 * <br> * exemples 1-3 * | 21,22 | |
| | ----- | | |
| X | CN 107 286 001 A (CHINA PETROLEUM & CHEM CORP ET AL.) 24 octobre 2017 (2017-10-24) | 21 | |
| Y | * abrégé * <br> * revendication 1 * | 21,22 | |
| | ----- | | **DOMAINES TECHNIQUES RECHERCHES (IPC)** |
| Y | CN 105 753 666 A (PETRO-OIL AND LUBRICANT RES INST OF THE GENERAL LOGISITIC DEPT OF PLA) 13 juillet 2016 (2016-07-13) <br> * revendications 1-9 * | 21,22 | |
| | ----- | | |

Le présent rapport a été établi pour toutes les revendications

| Lieu de la recherche | Date d'achèvement de la recherche | Examinateur |
|---|---|---|
| Munich | 10 juin 2020 | Marie, Gérald |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 20 16 5959

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-06-2020

| Document brevet cité au rapport de recherche | Date de publication | Membre(s) de la famille de brevet(s) | Date de publication |
|---|---|---|---|
| WO 2010116075 A2 | 14-10-2010 | CA 2754729 A1<br>CN 102361550 A<br>EP 2416646 A2<br>FR 2943889 A1<br>PL 2416646 T3<br>US 2012020910 A1<br>WO 2010116075 A2 | 14-10-2010<br>22-02-2012<br>15-02-2012<br>08-10-2010<br>28-06-2019<br>26-01-2012<br>14-10-2010 |
| EP 1938684 A1 | 02-07-2008 | AU 2007344948 A1<br>BR PI0720627 A2<br>CA 2673165 A1<br>CY 1109473 T1<br>EP 1938684 A1<br>ES 2329729 T3<br>FR 2910784 A1<br>JP 5219097 B2<br>JP 2010514744 A<br>PT 1938684 E<br>RU 2009128641 A<br>US 2008166315 A1<br>WO 2008090294 A1<br>ZA 200905126 B | 31-07-2008<br>25-03-2014<br>31-07-2008<br>13-08-2014<br>02-07-2008<br>30-11-2009<br>04-07-2008<br>26-06-2013<br>06-05-2010<br>22-10-2009<br>10-02-2011<br>10-07-2008<br>31-07-2008<br>29-09-2010 |
| WO 2010001048 A2 | 07-01-2010 | CA 2726266 A1<br>CN 102076212 A<br>EP 2306816 A2<br>ES 2540572 T3<br>FR 2933271 A1<br>MY 148001 A<br>PL 2306816 T3<br>US 2011104097 A1<br>WO 2010001048 A2 | 07-01-2010<br>25-05-2011<br>13-04-2011<br>10-07-2015<br>08-01-2010<br>28-02-2013<br>31-08-2015<br>05-05-2011<br>07-01-2010 |
| GB 603872 A | 24-06-1948 | AUCUN | |
| CN 206337195 U | 18-07-2017 | AUCUN | |
| US 2015291722 A1 | 15-10-2015 | CN 104974025 A<br>US 2015291722 A1<br>WO 2015154626 A1 | 14-10-2015<br>15-10-2015<br>15-10-2015 |
| CN 106518641 A | 22-03-2017 | AUCUN | |
| CN 109053394 A | 21-12-2018 | AUCUN | |
| CN 106588590 A | 26-04-2017 | AUCUN | |

Pour tout renseignement concernant cette annexe : voir Journal Officiel de l'Office européen des brevets, No.12/82

EPO FORM P0460

page 1 de 2

**ANNEXE AU RAPPORT DE RECHERCHE EUROPEENNE
RELATIF A LA DEMANDE DE BREVET EUROPEEN NO.**

EP 20 16 5959

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-06-2020

| Document brevet cité au rapport de recherche | Date de publication | Membre(s) de la famille de brevet(s) | Date de publication |
|---|---|---|---|
| CN 109096062 A | 28-12-2018 | AUCUN | |
| CN 109096065 A | 28-12-2018 | AUCUN | |
| CN 107286001 A | 24-10-2017 | AUCUN | |
| CN 105753666 A | 13-07-2016 | AUCUN | |

EPO FORM P0460

Pour tout renseignement concernant cette annexe : voir Journal Officiel de l'Office européen des brevets, No.12/82

page 2 de 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1938684 A1
- WO 2010001048 A1
- WO 2010116075 A1

**Littérature non-brevet citée dans la description**

- *CHEMICAL ABSTRACTS,* 7553-56-2
- *CHEMICAL ABSTRACTS,* 52-51-7
- *CHEMICAL ABSTRACTS,* 85409-22-9
- *CHEMICAL ABSTRACTS,* 68391-01-5
- *CHEMICAL ABSTRACTS,* 25655-41-8
- *CHEMICAL ABSTRACTS,* 85409-23-0
- *CHEMICAL ABSTRACTS,* 68424-85-1
- *CHEMICAL ABSTRACTS,* 111-30-8
- *CHEMICAL ABSTRACTS,* 64-17-5
- *CHEMICAL ABSTRACTS,* 79-21-0
- *CHEMICAL ABSTRACTS,* 1338-23-4
- *CHEMICAL ABSTRACTS,* 638-37-9
- *CHEMICAL ABSTRACTS,* 105-57-7
- *CHEMICAL ABSTRACTS,* 111-46-6
- *CHEMICAL ABSTRACTS,* 50-81-7
- *CHEMICAL ABSTRACTS,* 77-92-9
- *CHEMICAL ABSTRACTS,* 121-33-5
- *CHEMICAL ABSTRACTS,* 90-05-1
- *CHEMICAL ABSTRACTS,* 97-53-0
- *CHEMICAL ABSTRACTS,* 108-95-2
- *CHEMICAL ABSTRACTS,* 99-76-3
- *CHEMICAL ABSTRACTS,* 94-13-3
- *CHEMICAL ABSTRACTS,* 123-03-5
- *CHEMICAL ABSTRACTS,* 28349-72-6
- *CHEMICAL ABSTRACTS,* 57-55-6
- *CHEMICAL ABSTRACTS,* 107-21-1
- *CHEMICAL ABSTRACTS,* 56-81-5
- *CHEMICAL ABSTRACTS,* 67-63-0
- *CHEMICAL ABSTRACTS,* 67-68-5
- *CHEMICAL ABSTRACTS,* 25322-68-3
- *CHEMICAL ABSTRACTS,* 110-80-5
- *CHEMICAL ABSTRACTS,* 122-99-6
- *CHEMICAL ABSTRACTS,* 97-99-4
- *CHEMICAL ABSTRACTS,* 7757-79-1
- *CHEMICAL ABSTRACTS,* 10043-35-3
- *CHEMICAL ABSTRACTS,* 68-04-2
- *CHEMICAL ABSTRACTS,* 10124-56-8
- *CHEMICAL ABSTRACTS,* 127-09-3
- *CHEMICAL ABSTRACTS,* 7647-01-0
- *CHEMICAL ABSTRACTS,* 56-35-9
- *CHEMICAL ABSTRACTS,* 7558-79-4
- *CHEMICAL ABSTRACTS,* 7558-80-7
- *CHEMICAL ABSTRACTS,* 60-00-4
- *CHEMICAL ABSTRACTS,* 85711-69-9
- *CHEMICAL ABSTRACTS,* 584-08-7
- *CHEMICAL ABSTRACTS,* 302-17-0
- Transitional Guidance on Efficacy Assessment for Product; Type 22 Embalming Products. Transitional Guidance on the Biocidal Products Regulation. Août 2014